# EUROPEAN PATENT SPECIFICATION

(11) **EP 4 237 238 B1**
(45) Date of publication and mention of the grant of the patent: **31.07.2024**
(21) Application number: 21811657.2
(22) Date of filing: 29.10.2021
(51) Int. Cl.: B32B 5/02, B32B 5/06, B32B 5/26, A43B 1/02, A43B 23/02, A43D 8/22, D06M 17/00, D06Q 1/14, A41D 27/08

(54) **PRINTED COMPOSITE NONWOVEN TEXTILE SUITABLE FOR APPAREL AND METHODS FOR PRODUCING THE SAME**
FÜR BEKLEIDUNG GEEIGNETER BEDRUCKTER VERBUNDVLIESSTOFF UND VERFAHREN ZUR HERSTELLUNG DAVON
TEXTILE NON-TISSÉ COMPOSITE IMPRIMÉ APPROPRIÉ POUR DE L'HABILLEMENT ET PROCÉDÉS DE PRODUCTION CORRESPONDANTS

(30) Priority: 30.10.2020 US 202063108229 P; 28.10.2021 US 202117513478
(43) Date of publication of application: 06.09.2023
(73) Proprietor: NIKE Innovate C.V., Beaverton, Oregon 97005 (US)
(72) Inventor: BRANDT, Baron C., Beaverton, Oregon 97005 (US); LUND, Dallas, Beaverton, Oregon 97005 (US); MCFARLAND, William C., II, Beaverton, Oregon 97005 (US); MORGAN, Daniel P., Beaverton, Oregon 97005 (US); OU, Yang-Hua, Taichung, 406 (TW); STAUB, Andrea J., Beaverton, Oregon 97005 (US); TURNER, David, Beaverton, Oregon 97005 (US)
(74) Representative: Müller-Boré & Partner Patentanwälte PartG mbB
(86) International application number: PCT/US2021/057210
(87) International publication number: WO 2022/094184

(56) References cited:
- EP-A2- 2 628 848
- WO-A1-2013/151978
- WO-A1-2019/231544
- WO-A2-2008/053449
- CA-A- 1 075 449
- US-A- 4 350 727
- US-A1- 2011 034 100
- US-A1- 2015 126 090

## Description

### FIELD OF THE INVENTION

Aspects herein are directed to a printed composite nonwoven textile suitable for apparel and other articles and methods for producing the same. The claimed invention is set out in the independent claims. Further developments of the claimed invention are the subject matter of the dependent claims.

### BACKGROUND OF THE INVENTION

Traditional nonwoven textiles generally have features that are not suitable for use in articles of apparel. Due to these features, as well as end uses in, for example, the cleaning industry and the personal hygiene industry, traditional nonwoven textiles can be difficult to print on and may not include aesthetically pleasing properties. Moreover, in instances where a nonwoven textile is printed, the printed aesthetic is generally applied to an outermost surface, is of poor quality, and is diminished over time due to, for example, abrasion. Such a printed aesthetic is not desirable for nonwoven textiles that are suitable for use in articles of apparel.

WO 2008/053449 A2 describes a multi-layered nonwoven having a printed layer that comprises a pair of outer layers, with each of the outer layers comprising a carded web. An inner layer is disposed between the outer layers and includes printed indicia, which may be in the form of text, graphics, colors, or other suitable indicia. The inner layer is bonded to each of the outer layers by hydroentanglement.

WO 2019/231544 A1 describes a multilayer textile having a printed layer that is overlaid by another layer, wherein the multilayer textile comprises a first layer, a second layer, and a third layer. The second layer is positioned between the first layer and the third layer, and a sublimation-printed component of the second layer is visible through the first layer. For instance, the first layer may be formed from a woven material comprising one or more multifilament yarns and a woven structure such that the first layer is at least partially translucent. In another instance, the second layer may be formed from a non-woven material comprising a plurality of fibers and entanglement of the same such that the nonwoven material is both compatible with and capable of withstanding a sublimation printing technique such that a sublimation-printed component may be formed on the second layer via sublimation printing. In yet another instance, the third layer may be formed by a loose fiberfill material configured such that the third layer, at least partially, retains, for example, body heat generated by a wearer.

### BRIEF DESCRIPTION OF THE DRAWING

Examples of aspects herein are described in detail below with reference to the attached drawing figures, wherein:
FIG. 1 illustrates an example lifecycle for an example printed composite nonwoven textile in accordance with aspects herein;
FIG. 2 illustrates a first web of fibers for use in the example composite nonwoven textile of FIG. 1 in accordance with aspects herein;
FIG. 3 illustrates a printed layer for use in the example composite nonwoven textile of FIG. 1 in accordance with aspects herein;
FIG. 4 illustrates a second web of fibers for use in the example composite nonwoven textile of FIG. 1 in accordance with aspects herein;
FIG. 5 illustrates an optional third web of fibers for use in the example composite nonwoven textile of FIG. 1 in accordance with aspects herein;
FIG. 6 illustrates an elastomeric layer for use in the example composite nonwoven textile of FIG. 1 in accordance with aspects herein;
FIG. 7 illustrates an example manufacturing process for use in making the example printed composite nonwoven textile of FIG. 1 and for further use in making an article of apparel using the example printed composite nonwoven textile of FIG. 1 in accordance with aspects herein;
FIG. 8 illustrates an example printed layer comprising an interior web of fibers and a printed component produced using the manufacturing process of FIG. 7 in accordance with aspects herein;
FIG. 9 illustrates a cross-section view taken at cut line 9-9 of FIG. 8 in accordance with aspects herein;
FIG. 10 illustrates a cross-section view of an alternative printed component for the example printed layer of FIG. 8 in accordance with aspects herein;
FIG. 11 illustrates an example printed composite nonwoven textile with the printed layer of FIG. 8 produced using the manufacturing process of FIG. 7 in accordance with aspects herein;
FIG. 12 illustrates a cross-section view taken at cut line 12-12 of FIG. 11 in accordance with aspects herein;
FIG. 13 illustrates a magnified view taken at area 13 of FIG. 12 in accordance with aspects herein;
FIG. 14 illustrates a magnified view taken at area 14 of FIG. 12 in accordance with aspects herein;
FIG. 15 illustrates an example printed layer comprising a spunlace layer and a printed component produced using the manufacturing process of FIG. 7 in accordance with aspects herein;
FIG. 16 illustrates a cross-section view taken at cut line 16-16 of FIG. 15 in accordance with aspects herein;
FIG. 17 illustrates a cross-section view of an alternative printed component for the example printed layer of FIG. 15 in accordance with aspects herein;
FIG. 18 illustrates an example printed composite nonwoven textile with the printed layer of FIG. 15 produced using the manufacturing process of FIG. 7 in accordance with aspects herein;
FIG. 19 illustrates a cross-section view taken at cut line 19-19 of FIG. 18 in accordance with aspects herein;
FIG. 20 illustrates a magnified view taken at area 20 of FIG. 19 in accordance with aspects herein;
FIG. 21 illustrates a magnified view taken at area 21 of FIG. 19 in accordance with aspects herein.
FIG. 22 illustrates an example upper body article of apparel in accordance with aspects herein;
FIG. 23 illustrates an example lower body article of apparel in accordance with aspects herein;
FIG. 24 illustrates a cross-section view taken at cut line 24-24 of FIG. 22 in accordance with aspects herein; and
FIG. 25 illustrates a cross-section view taken at cut line 25-25 of FIG. 23 in accordance with aspects herein.

### DETAILED DESCRIPTION OF THE INVENTION

The subject matter of the present invention is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" and/or "block" might be used herein to connote different elements of methods employed, the terms should not be interpreted as implying any particular order among or between various steps herein disclosed unless and except when the order of individual steps is explicitly stated.

Traditional nonwoven textiles generally have features that are not suitable for use in articles of apparel. Such features may include a lack of stretch and recovery properties, heavy weights, lack of drapability, a rough hand, symmetric faces or surfaces, and, in some instances where increased insulation is desired, lack of insulation properties. Due to these features, as well as end uses in, for example, the cleaning industry and the personal hygiene industry, traditional nonwoven textiles may be difficult to print and may not include aesthetically pleasing properties. Moreover, in instances where a nonwoven textile is printed, the printed aesthetic is applied to an outermost surface, is of poor quality, and is diminished over time due to, for example, abrasion. Such a printed aesthetic is not desirable for nonwoven textiles that are suitable for use in articles of apparel.

Aspects herein are directed to a printed composite nonwoven textile suitable for use in apparel and other articles and methods of making the same. At a high level, the printed composite nonwoven textile comprises one or more entangled webs of fibers and a printed layer (e.g., an interior layer including a printed component). The printed composite nonwoven textile comprises a first entangled web of fibers and an interior layer. The first entangled web of fibers has a first face and an opposite second face. The first face of the first entangled web forms, at least in part, a first facing side of the printed composite nonwoven textile. The interior layer has a first face positioned adjacent to the second face of the first entangled web of fibers. The first face of the interior layer comprises a printed component having a first portion that is more incorporated into the first entangled web of fibers than a second portion of the printed component.

In other example aspects, the printed composite nonwoven textile may include one or more additional layers (e.g., a second entangled web of fibers, a third entangled web of fibers, and/or an elastomeric layer) that are layered together and/or entangled with the first entangled web and/or the interior layer. In one such aspect, the printed composite nonwoven textile includes a second entangled web of fibers that has a first face and an opposite second face that forms, at least in part, a second facing side of the printed composite nonwoven textile. As such, the interior layer is positioned between the first and second entangled webs of fibers such that the first face of the interior layer is adjacent to the second face of the first entangled web of fibers and the second face of the interior layer is adjacent to the first face of the second entangled web of fibers.

Additionally, and in accordance with aspects herein, on account of features of the first and second entangled webs of fibers, as well as features of the interior layer and/or any additional layers, the printed composite nonwoven textile may be asymmetrically faced (e.g., a printed asymmetrical-faced composite nonwoven textile). In further example aspects, these features may be configured such that the printed composite nonwoven textile is suitable for an article of apparel. When the printed composite nonwoven textile is incorporated into an article of apparel, the first facing side forms an outer-facing surface of the article of apparel, and the second facing side forms an inner-facing surface of the article. As such, the first entangled web may have features that makes it suitable for exposure to an external environment when the printed asymmetrical-faced composite nonwoven textile is incorporated into the article of apparel. For example, the fibers that form the first entangled web may have a denier that is about two times greater than the denier of the fibers used to form the second entangled web such that the first entangled web may better withstand abrasion forces without breakage of the fibers and thus, enhance the durability of the printed component.

Features of the second entangled web of fibers make it suitable for forming a skin-facing surface when the printed asymmetrical-faced composite nonwoven textile is formed into the article of apparel. For instance, the fibers that form the second entangled web may have a denier that is about half the denier of the fibers used to form the first entangled web because the second facing side may be less exposed to abrasion forces. Moreover, a smaller denier may produce a soft hand making it comfortable for skin or near skin contact. Moreover, the second entangled web may include silicone-coated fibers which also imparts a soft hand and improves drapability of the textile (i.e., makes the textile less stiff).

Other asymmetric features of the printed composite nonwoven textile contemplated herein include the printed component and/or different color properties associated with the first facing side and the second facing side. In one aspect, the printed component may be more visible on the first facing side than the second facing side. In another aspect, the printed component may be visible on the first facing side but not the second facing side. Other aspects contemplate that the color properties may be in the form of a heather effect that is more pronounced on the first facing side compared to the second facing side. The printed component and the different color properties may impart a desirable aesthetic to an apparel item formed from the nonwoven textile and may also provide a visual marker to a wearer as to which side of the apparel item is outer-facing and which side is inner-facing. The different color properties may also make the apparel item suitable for reversible wear (i.e., wearing the apparel item "inside out"). The different color properties may, for instance, be imparted to the sides by selecting particular colors for fibers forming the different layers of the textile and by selecting entanglement parameters such that the colored fibers are selectively moved more to the first face as compared to the second face or vice versa.

The one or more additional layers of the printed composite nonwoven textile may further include an elastomeric layer positioned between the first and second entangled webs of fibers. The elastomeric layer imparts stretch and recovery properties to the printed composite nonwoven textile making it suitable for use in articles of apparel such as upper-body garments and lower-body garments. On its own, the elastomeric layer may lack sufficient tensile strength to withstand normal wear and tear. Thus, the elastomeric layer is integrated into the printed composite nonwoven textile by extending fibers from the different webs through the elastomeric layer using an entanglement process to produce a cohesive structure.

In some example aspects, the one or more additional layers of the printed composite nonwoven textile include additional entangled webs (e.g., a third entangled web of fibers) layered together with the elastomeric layer. The weights of the pre-entangled webs may be selected to achieve a lightweight composite nonwoven textile having a minimal thickness after entanglement. Moreover, selection of the number of entangled webs, fiber denier, type of fiber, length of fibers, and the like, produces a resulting printed composite nonwoven textile that provides enhanced insulation through trapping of air between the fibers forming the textile. Additionally, properties of the different webs and/or the number of webs used to form the printed composite nonwoven textile may be adjusted to achieve different desired end properties for the printed nonwoven textile including different desired end properties for each of the sides of the printed composite nonwoven textile. The result is a lightweight, printed asymmetrical-faced composite nonwoven textile with stretch and recovery, good drape, an interesting visual aesthetic, good resistance to abrasion, and a soft hand, making the printed composite nonwoven textile ideal for forming articles of apparel suitable for athletic wear.

In further example aspects, one or more webs of fibers, the printed layer (e.g., the interior layer including the printed component), and one or more optional additional layers may form a nonwoven textile (e.g., a composite structure). Such aspects contemplate that the one or more webs of fibers, the interior layer, the printed layer, the one or more optional additional layers, the nonwoven textile, and/or the printed composite nonwoven textile may be finished in a variety of ways. For instance, selected printing techniques may be used to print one or more patterns, graphics, logos, and the like that are included in the nonwoven textile. In one example aspect, printing may be applied to the one or more webs of fibers prior to entanglement such that the printed component is integrated into the nonwoven textile during entanglement. Moreover, when the nonwoven textile and/or the printed composite nonwoven textile are formed into an article of apparel, different techniques may be used to seam textile edges together. For example, textile edges may be overlapped, and an entanglement process may be used to entangle together fibers from the textile edges thereby forming a seam.

Aspects herein further contemplate that the printed composite nonwoven textile is recyclable, and in some aspects, the textile may be fully recyclable. Thus, in aspects, the fibers selected to form the entangled webs may include recycled materials including recycled polyethylene terephthalate (PET) fibers, commonly known as polyester fibers. Additionally, materials selected to form the elastomeric layer may also be fully recyclable. Use of recycled fibers and materials reduces the carbon footprint of the printed composite nonwoven textile.

The printed composite nonwoven textile is formed by positioning the printed layer (e.g., an interior layer including a printing component) between the first web of fibers and the one or more additional layers to form a composite structure. Prior to forming the composite structure, the printed layer may be formed by utilizing a printing technique to form a printed component on an interior layer. Moreover, the selection of properties for the first web of fibers, the interior layer, and the one or more additional layers, such as number of webs, fiber denier, weight of the individual webs, fiber length, fiber color, and fiber coating, is based on desired end properties of the printed composite nonwoven textile. After forming the printed layer and then combining the same with the first web of fibers and the one or more additional layers to form the composite structure, a mechanical entanglement process is performed. In one example aspect, the mechanical entanglement process is needlepunching. Different parameters associated with the needlepunching process such as needle selection, stitch density, penetration depth, direction of penetration, number of needle passes, and the like, are selected based on the desired end properties of the asymmetrical-faced printed composite nonwoven textile. For example, the parameters may be selected to produce a nonwoven textile that has a desired thickness, a desired degree of stretch and recovery, a desired weight, a desired drape or stiffness, and the like.

Additional aspects herein are directed to methods of making a printed composite nonwoven textile, and in general, such methods include one or more steps related to forming a printed layer, combining the printed layer with a first web of fibers and/or one or more additional layers to form a composite structure, and subjecting the composite structure to an entanglement process. A method of manufacturing a printed composite nonwoven textile includes a step of positioning a first face of a printed layer adjacent to a second face of a first web of fibers to form a composite structure. The printed layer includes a printed component, which may be formed, at least in part, by a colorant that was previously applied to an interior layer. The method of manufacturing further includes a step of subjecting the composite structure to a needle entanglement process in which, subsequently thereto, at least a portion of the printed component is incorporated into the first web of fibers.

A method of manufacturing a printed asymmetrical-faced composite nonwoven textile includes a step of utilizing a print technique to form a printed component on an interior layer to from a printed layer and a subsequent step of positioning a first face of the printed layer adjacent to a second face of a first web of fibers to form a composite structure. The method includes another step of subjecting the composite structure to a variable entanglement process in which, subsequently thereto, at least a portion of the printed component and a first face of the first web of fibers form, at least in part, a first facing side of the asymmetrical-faced composite nonwoven textile.

A printing technique (e.g., application of a colorant via digital printing, application of a sublimation dye via sublimation printing, etc.) is utilized to form the printed component on the interior layer. In particular, the printed component is formed on the interior layer pre-entanglement (i.e., prior to entangling fibers of the one or more entangled webs of fibers included in the printed composite nonwoven textile). For instance, the interior layer may comprise a web of fibers (e.g., a pre-entangled web of fibers) and further the interior layer may be a spunlace layer and/or may comprise spunlace fibers.

As used herein, the term "article of apparel" is intended to encompass articles worn by a wearer. As such, they may include upper-body garments (e.g., tops, t-shirts, pullovers, hoodies, jackets, coats, and the like), and lower-body garments (e.g., pants, shorts, tights, capris, unitards, and the like). Articles of apparel may also include hats, gloves, sleeves (arm sleeves, calf sleeves), articles of footwear such as uppers for shoes, and the like. The term "inner-facing surface" when referring to the article of apparel means the surface that is configured to face towards a body surface of a wearer, and the term "outer-facing surface" means that surface this is configured to face away from the body surface of the wearer and toward an external environment. The term "innermost-facing surface" means the surface closest to the body surface of the wearer with respect to other layers of the article of apparel, and the term "outermost-facing surface" means the surface that is positioned furthest away from the body surface of the wearer with respect to the other layers of the article of apparel.

As used herein, the term "nonwoven textile" as used herein refers to fibers that are held together by mechanical and/or chemical interactions without being in the form of a knit, woven, braided construction, or other structured construction. In a particular aspect, the nonwoven textile includes a collection of fibers that are mechanically manipulated to form a mat-like material. Stated differently, nonwoven textiles are directly made from fibers. The nonwoven textile may include different webs of fibers formed into a cohesive structure, where the different webs of fibers may have a different or similar composition of fibers and/or different properties. Further, any and all aspects, and any variation thereof of the nonwoven textile contemplated herein may be included in the printed composite nonwoven textile. The term "web of fibers" refers to a web of fibers prior to undergoing a mechanical entanglement process with one or more other webs of fibers. The web of fibers includes fibers that have undergone a carding and lapping process that generally aligns the fibers in one or more common directions that extend along an x, y plane and that achieves a desired basis weight. The web of fibers may also undergo a light needling process or mechanical entanglement process that entangles the fibers of the web to a degree such that the web of fibers forms a cohesive structure that can be manipulated (e.g., rolled on to a roller, un-rolled from the roller, stacked, and the like). The web of fibers may also undergo one or more additional processing steps such as printing prior to being entangled with other webs of fibers. The term "entangled web of fibers" when referring to the nonwoven textile refers to a web of fibers after it has undergone mechanical entanglement with one or more other webs of fibers. As such, a web of entangled fibers may include fibers originally present in the web of fibers forming the layer as well as fibers that are present in other webs of fibers that have been moved through the entanglement process into the web of entangled fibers. The term "interior layer" as used herein refers to a layer of the nonwoven textile that is positioned between at least two other layers of the nonwoven textile. The term "printed layer" as used herein refers to a layer of the nonwoven textile that includes a printed component.

In example aspects, the printed layer is arranged such that it is positioned interior to an outermost web of fibers (e.g., the first web of fibers) or layer in the printed composite nonwoven textile. Such aspects contemplate that the printed layer and in turn, the printed component are less exposed or unexposed to an external environment. As a result, the printed layer and the printed component are less susceptible to wear and tear and abrasion. In further example aspects, an arrangement of the printed layer at an interior layer may also aid in securing the printed layer in place in the printed composite nonwoven textile. Moreover, features of the printed layer may result in less entanglement than other webs of fibers and/or layers of the printed composite nonwoven textile. As such, positioning the printed layer between two webs of fibers and/or layers such that it is an interior layer of the printed composite nonwoven textile may provide more entanglement for the printed layer than if it were positioned as an exterior layer or outermost layer of the printed composite nonwoven textile.

The mechanical entanglement process contemplated herein may include needle entanglement (commonly known as needlepunching) using barbed or structured needles (e.g., forked needles), or fluid entanglement. In aspects contemplated herein, needlepunching may be used due to the small denier of the fibers being used and the ability to fine tune different parameters associated with the needlepunching process. Needlepunching generally uses barbed or spiked needles to reposition a percentage of fibers from a generally horizontal orientation (an orientation extending along an x, y plane) to a generally vertical orientation (a z-direction orientation). Referring to the needlepunching process in general, the carded, lapped, and pre-needled webs may be stacked with other carded, lapped, and pre-needled webs and passed between a bed plate and a stripper plate positioned on opposing sides of the stacked web configuration. Barbed needles, which are fixed to a needle board, pass in and out through the stacked web configuration, and the stripper plate strips the fibers from the needles after the needles have moved in and out of the stacked web configuration. The distance between the stripper plate and the bed plate may be adjusted to control web compression during needling. The needle board repeatedly engages and disengages from the stacked web configuration as the stacked web configuration is moved in a machine direction along a conveyance system such that the length of the stacked web configuration is needled. Aspects herein contemplate using multiple needle boards sequentially positioned at different points along the conveyance system where different needle boards may engage the stacked web configuration from different faces of the stacked web configuration (e.g., an upper face and a lower face) as the stacked web configuration moves in the machine direction. Each engagement of a needle board with the stacked web configuration is known herein as a "pass." Parameters associated with particular needle boards may be adjusted to achieve desired properties of a resulting needled nonwoven textile (e.g., basis weight, thickness, and the like). The different parameters may include stitch density (SD) which is the number of needles per cm² (n/cm²) used during an entanglement pass and penetration depth (PD) which is how far the needle passes through the stacked web configuration before being pulled out of the stacked web configuration. Parameters associated with the needlepunching process in general may also be adjusted such as the spacing between the bed plate and the stripper plate and the speed of conveyance of the stacked web configuration.

Aspects herein contemplate using barbed needle (a needle having barbs arranged along a length of the needle) although other needle types are contemplated herein. The barbs on the needle "capture" fibers as the barb moves from a first face to an opposing second face of the stacked web configuration. The movement of the needle through the stacked web configuration effectively moves or pushes fibers captured by the barbs from a location near or at the first facing side to a location near or at the second facing side and further causes physical interactions with other fibers helping to "lock" the moved fibers into place through, for example, friction. It is also contemplated herein that the needles may pass through the stacked web configuration from the second facing side toward the first facing side. In example aspects, the number of barbs on the needle that interact with fibers may be based on the penetration depth of the needle. For example, all barbs may interact with fibers when the penetration depth is a first amount, and fewer than all barbs may interact with fibers as the penetration depth decreases. In further example aspects, the size of the barb may be adjusted based on the denier of fibers used in the web(s). For example, the barb size may be selected so as to engage with small denier (e.g. fine) fibers but not with large denier fibers so as to cause selective movement of the small denier fibers but not the large denier fibers. In another example, the barb size may be selected so as to engage with both small denier and large denier fibers so as to cause movements of both fibers through the webs.

After entanglement, the nonwoven textile may include a first facing side and an opposite second facing side which both face outward with respect to an interior of the nonwoven textile and comprise the outermost faces of the nonwoven textile. As such, when viewing the nonwoven textile, the first facing side and the second facing side are each fully visible. The first facing side and the second facing side may both extend along x, y planes that are generally parallel and offset from each other.

The term "elastomeric layer" as used herein refers to a layer that has stretch and recovery properties (i.e., is elastically resilient) in at least one orientational axis, which includes both a layer having stretch and recovery in a single orientational axis and a layer having stretch and recovery in multiple orientational axes. Examples of an orientational axis include a length direction, a width direction, an x-direction, a y-direction, and any direction angularly offset from a length direction, a width direction, an x-direction, and a y-direction. The elastomeric layer may be formed from thermoplastic elastomers such as thermoplastic polyurethane (TPU), thermoplastic polyether ester elastomer (TPEE), combinations of TPU and TPEE and the like. The elastomeric layer may comprise a spunbond layer, a film, a web, and the like. In example aspects, the elastomeric layer may include a spunbond TPEE or a meltblown TPU. Nonwoven elastomeric materials such a spunbond TPEE or a meltblown TPU allow for lower basis weights than elastomeric films. As well, they are generally more breathable and permeable due to the fibrous nature of the web versus a film, and they are generally more pliable (i.e., less stiff) than films. These factors (low basis weight, breathable and permeable, pliable) make them ideal for use in the example nonwoven textile described herein especially in the apparel context where these are desirable features.

When referring to fibers, the term denier or denier per fiber is a unit of measure for the linear mass density of the fiber and more particularly, it is the mass in grams per 9000 meters of the fiber. In one example aspect, the denier of a fiber may be measured using ASTM D1577-07. The diameter of a fiber may be calculated based on the fiber's denier and the fiber's density. Fibers contemplated herein may be formed of a number of different materials (e.g., cotton, nylon and the like) including polyethylene terephthalate (PET) commonly known as polyester. The PET fibers may include virgin PET fibers (fibers that have not been recycled), and recycled PET fibers. Recycled PET fibers include shredded PET fibers derived from shredded articles and re-extruded PET fibers (fibers that are re-extruded using recycled PET chips). In further aspects, fibers contemplated herein may be configured to afford hydrophobic properties to the nonwoven textile.

The term "silicone-coated fiber" as used herein may mean a fiber having a continuous silicone coating such that the silicone coating completely covers the fiber along its length. In one example, the fiber may form a core and the silicone may form a sheath surrounding the core. In other example aspects, the term "silicone-coated fiber" may mean a fiber that has an intermittent coating of silicone in at least some areas along the length of the fiber. For instance, the fiber may be sprayed with a silicone coating. In this aspect, if a particular web of fibers includes 100% by weight of silicone-coated fibers, it is contemplated herein that the fibers that form the web may have areas that do not include the silicone coating. It is contemplated herein that the silicone-coated fibers are incorporated into the webs of fibers that form the nonwoven textile. Said differently, the silicone coating on the fibers is not applied to the fibers after the nonwoven textile is formed using, for example, a silicone spray finish.

The term "color" or "color property" as used herein when referring to the nonwoven textile generally refers to an observable color of fibers that form the nonwoven textile. Such aspects contemplate that a color may be any color that may be afforded to fibers using dyes, pigments, and/or colorants that are known in the art. As such, fibers may be configured to have a color including, but not limited to red, orange, yellow, green, blue, indigo, violet, white, black, and shades thereof. In one example aspect, the color may be imparted to the fiber when the fiber is formed (commonly known as dope dyeing). In dope dyeing, the color is added to the fiber as it is being extruded such that the color is integral to the fiber and is not added to the fiber in a post-formation step (e.g., through a piece dyeing step).

Aspects related to a color further contemplate determining if one color is different from another color. In these aspects, a color may comprise a numerical color value, which may be determined by using instruments that objectively measure and/or calculate color values of a color of an object by standardizing and/or quantifying factors that may affect a perception of a color. Such instruments include, but are not limited to spectroradiometers, spectrophotometers, colorimeters, and the like. Thus, aspects herein contemplate that a "color" of the nonwoven textile provided by fibers may comprise a numerical color value that is measured and/or calculated using spectroradiometers and/or spectrophotometers. Moreover, numerical color values may be associated with a color space or color model, which is a specific organization of colors that provides color representations for numerical color values, and thus, each numerical color value corresponds to a singular color represented in the color space or color model.

In these aspects, a color may be determined to be different from another color if a numerical color value of each color differs. Such a determination may be made by measuring and/or calculating a numerical color value of, for instance, a first web of fibers having a first color with a spectroradiometer, a spectrophotometer, or a colorimeter, measuring and/or calculating a numerical color value of a second web of fibers having a second color with the same instrument (i.e., if a colorimeter was used to measure the numerical color value of the first color, then a colorimeter is used to measure the numerical color value of the second color), and comparing the numerical color value of the first color with the numerical color value of the second color. In another example, the determination may be made by measuring and/or calculating a numerical color value of a first area of the nonwoven textile with a spectroradiometer, a spectrophotometer, or a colorimeter, measuring and/or calculating a numerical color value of a second area of the nonwoven textile having a second color with the same instrument, and comparing the numerical color value of the first color with the numerical color value of the second color. If the numerical color values are not equal, then the first color or the first color property is different than the second color or the second color property, and vice versa.

Further, it is also contemplated that a visual distinction between two colors may correlate with a percentage difference between the numerical color values of the first color and the second color, and the visual distinction will be greater as the percentage difference between the color values increases. Moreover, a visual distinction may be based on a comparison between colors representations of the color values in a color space or model. For instance, when a first color has a numerical color value that corresponds to a represented color that is black or navy and a second color has a numerical color value that corresponds to a represented color that is red or yellow, a visual distinction between the first color and the second color is greater than a visual distinction between a first color with a represented color that is red and a second color with a represented color that is yellow.

The term "translucency" relates to a transmission of light, and "translucent" refers to a physical property of an object when a light strikes its surface in which some of the light is passed or transmitted through the object and some of the light is diffused, reflected, and/or absorbed. Thus, the term "translucent" when describing a web of fibers and/or one or more additional layers of the nonwoven textile means a web of fibers or a layer through which light partially passes through. Further, when a web of fibers or a layer is referred to herein as "at least partially" translucent, it is to be understood that "at least partially" refers to a portion, area, region, or location of the web of fibers or the layer at which the web of fibers or the layer is translucent and is not referring to a transmittance thereof. For instance, a web of fibers or a layer of the nonwoven textile that is at least partially translucent means that at some portion, area, region, or location of the layer light partially passes through. In another instance, a web of fibers or a layer that is at least partially translucent means that at one or more portions of the web of fibers or the layer, light partially passes through and at other, different portions of the web of fibers or the layer, light may or may not partially pass through.

The term "printing technique" as used herein generally refers to a process of applying a colored substance to a substrate (e.g., an interior layer of the printed nonwoven composite textile) and includes any printing process, technique, or method known by those skilled in the art. Generally, the colored substance may be a colorant, a sublimation dye, or both, and the colorant and the sublimation dye may be configured to have a color including, but not limited to red, orange, yellow, green, blue, indigo, violet, white, black, and shades thereof. As such, in example aspects, printing techniques contemplated herein include direct printing techniques in which one or more colorants are transferred to a substrate, and examples of direct printing techniques include screen printing, rotary printing, digital printing, and the like. The term "colorant" as used herein generally refers to any ink, pigment, dye, or other substance that colors something and may include a wide range of inks, pigments, or dyes that are compatible with at least one direct printing technique discussed herein. In one example aspect, the colorant may include commercially available inks that are known by those having ordinary skill in the art or proprietary inks to be used with digital printing techniques. Such inks may be water-based or oil-based and may include, but are not limited to cracking ink, discharge ink, glitter or shimmer ink, gloss ink, metallic ink, mirrored silver ink, plastisol ink, polyvinyl chloride ink (PVC-ink), non-PVC-ink, phthalate ink, non-phthalate ink, acrylic ink, suede ink, oil-based acrylic ink, polyurethane ink, high density ink, solvent ink, ultraviolet ink, and combinations thereof. It is also contemplated that an ink may include specialty inks, which may have one or more properties that are not typically included in commercially available inks. Such properties may include a visual characteristic that may give a specialty ink a metallic, pearlescent, color shift, or reflective appearance. Moreover, any of these inks may include additives, which may affect certain properties or components of an ink or may afford an ink additional properties or components. For example, an additive may cause an ink to be more compatible with certain inks and materials, and thus, an additive may be used to promote compatibility between an ink and a face of a layer of the printed composite nonwoven textile. In aspects, some types of ink may be more compatible with one or more steps of a method of manufacturing the printed composite nonwoven textile than other types of inks. Such aspects contemplate that a type of ink and/or a particular step of a method of manufacturing a printed composite nonwoven textile may be selected and/or modified for purposes of compatibility and/or to afford desirable features to the printed composite nonwoven textile. For instance, when the colorant is a water-based ink, a needle entanglement process may be more compatible than and/or provide advantages over a hydroentanglement process.

In other example aspects, printing techniques contemplated herein include sublimation printing techniques. The term "sublimation printing process" as used herein refers to a printing technique that utilizes heat and pressure to apply dyes to a substrate. Generally, a sublimation printing process may apply one or more sublimation dyes, which may have an affinity to a substrate (e.g., the interior layer of the printed composite nonwoven textile) and is applied thereto via sublimation printing. Sublimation dyes may include coloring agents derived from plant or synthetic sources that may be finely ground and included with a dispersing agent, and the sublimation dye may infuse into a substrate at the molecular level and impregnate color into a material. As understood by those skilled in the art, sublimation printing utilizes the science of sublimation, in which heat is applied to a solid, turning it into a gas through an endothermic reaction without passing through the liquid phase.

Sublimation printing may include solid, heat-sensitive dyes, dissolved in a liquid that, when under heat and pressure, change into gas, bond with a compatible substrate, and then change back into a solid. As a result, sublimation dyes are infused into a substrate at the molecular level. Further, sublimation printing processes contemplated herein may utilize a variety of components and techniques to apply a sublimation dye to a substrate (e.g., an interior layer of the printed composite nonwoven textile), and different sublimation printing processes may include similar and/or different aspects. For instance, one process may apply a sublimation dye directly to a substrate, while another process may use a transfer sheet. Moreover, some sublimation printing techniques may include a sublimation printer and/or may also use heat or energy to cause absorption of a sublimation dye to a substrate. In one non-limiting example, one or more sublimation dyes may be transferred to the interior layer by using a heat press to subject the interior layer and the one or more sublimation dyes applied thereto to a temperature of about 195 °C for about 1 second. As a result, the one or more sublimation dyes are transferred to the interior layer and are absorbed by at least a portion of the interior layer. In other aspects, the one or more sublimation dyes may be transferred to the interior layer by using a heat press to subject the interior layer and the one or more sublimation dyes applied thereto to a temperature of from about 225°C to about 165 °C, from about 220 °C to about 170 °C , from about 215 °C to about 175 °C , from about 210 °C to about 180 °C, from about 205 °C to about 185 °C, from about 200 °C to about 190 °C, or about 195 °C for a time of for about 30 second, for about 25 seconds, for about 20 seconds, for about 15 seconds, for about 10 seconds for about 5 seconds. As used herein, the term "about" means generally within ± 10% of an indicated value.

The term "printed component" as used herein means an image, graphic, design or visual indicia formed on a layer by one or more colorants or sublimation dyes that were applied to the layer via a printing technique in accordance with aspects herein. Moreover, the printed component may also include shapes including shapes associated with branding such as logos, images and the like, geometric shapes, organic shapes, patterns, letters, numbers, and the like. Further, the printed component may be formed, at least in part, by one or more colors afforded by one or more colorants or sublimation dyes, which may be configured to be of any color including, but not limited to red, orange, yellow, green, blue, indigo, violet, shades thereof.

Various measurements are provided herein with respect to the pre-entangled webs and the resulting nonwoven textile. Thickness of the resulting nonwoven textile may be measured using a precision thickness gauge. To measure thickness, for example, the nonwoven textile may be positioned on a flat anvil and a pressure foot is pressed on to it from the upper surface under a standard fixed load. A dial indicator on the precision thickness gauge gives an indication of the thickness in mm. Basis weight is measured using ISO3801 testing standard and has the units grams per square meter (gsm). Textile stiffness, which generally corresponds to drape is measured using ASTMD4032 (2008) testing standard and has the units kilogram force (Kgf). Fabric growth and recovery is measured using ASTM2594 testing standard and is expressed as a percentage. The term "stretch" as used herein means a textile characteristic measured as an increase of a specified distance under a prescribed tension and is generally expressed as a percentage of the original benchmark distance (i.e., the resting length or width). The term "growth" as used herein means an increase in distance of a specified benchmark (i.e., the resting length or width) after extension to a prescribed tension for a time interval followed by the release of tension and is usually expressed as a percentage of the original benchmark distance. "Recovery" as used herein means the ability of a textile to return to its original benchmark distance (i.e., its resting length or width) and is expressed as a percentage of the original benchmark distance. Thermal resistance, which generally corresponds to insulation features, is measured using ISO 11092 testing standard and has the units of RCT (M² * K/W).

Unless otherwise noted, all measurements provided herein are measured at standard ambient temperature and pressure (25 degrees Celsius or 298.15 K and 1 bar) with the nonwoven textile in a resting (un-stretched) state.

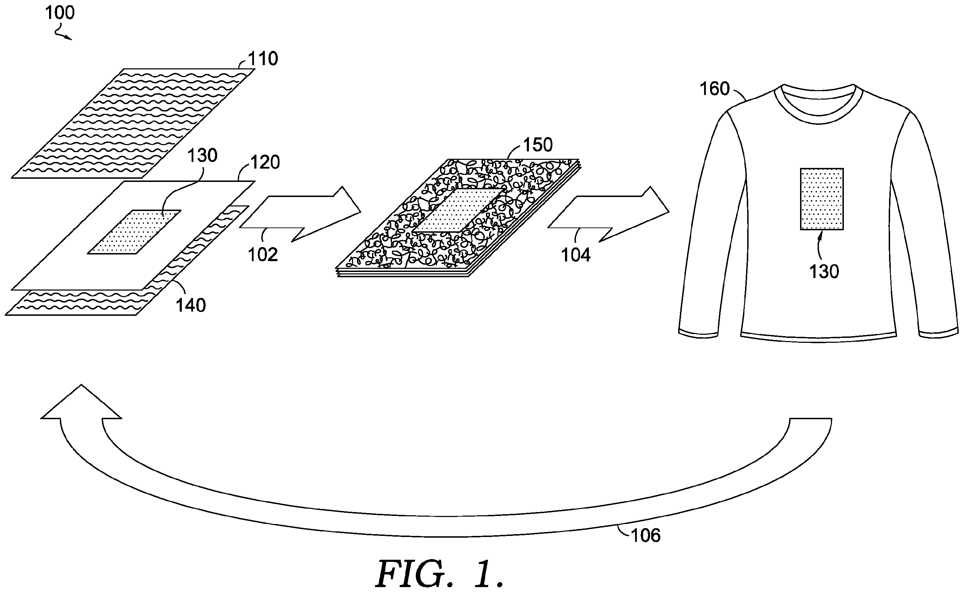

FIG. 1 is a schematic depiction of an example lifecycle for a printed composite nonwoven textile contemplated herein, which is indicated by reference numeral 100, and shows a first web of fibers 110, an interior layer 120 having a printed component 130 (e.g., a printed layer), and one or more additional layers 140 prior to entanglement (e.g., a second web of fibers, a third web of fibers, and/or an elastomeric layer). It is contemplated herein that, in some example aspects, any of the one or more additional layers 140 may be optional. In example aspects, the fibers used to form the first web of fibers 110, the interior layer 120, and the one or more additional layers 140 may include recycled fibers and, in particular, recycled PET fibers. Additionally, when the one or more additional layers 140 includes an elastomeric layer, example aspects herein contemplate that the elastomeric layer may be formed of a material that is recyclable. Arrow 102 schematically represents an entanglement step where the fibers in the first web of fibers 110, the interior layer 120, and/or the one or more additional layers 140 are entangled with each other such that one or more of the fibers extend into another layer and form a cohesive, printed composite nonwoven textile 150. Arrow 104 schematically represents a processing step where the printed composite nonwoven textile 150 is formed into an article of apparel 160 that includes the printed component 130. Although the article of apparel 160 is shown as an upper-body garment, it is contemplated herein that the article of apparel 160 may take other forms such as a lower-body garment, an upper of a shoe, a hat, gloves, sleeves, and the like. At the end of the life of the article of apparel 160, it is contemplated that a wearer may return the article of apparel 160 to, for example, the manufacturer/retailor where the article of apparel 160 may be fully recycled as indicated by arrow 106 to form shredded fibers and/or re-extruded fibers that are used to form webs of fibers such as the first web of fibers 110, the interior layer 120, and/or the one or more additional layers 140 thus creating a self-sustaining loop. This self-sustaining loop reduces the carbon impact typically associated with creating printed articles of apparel including knit, woven, and nonwoven articles of apparel.

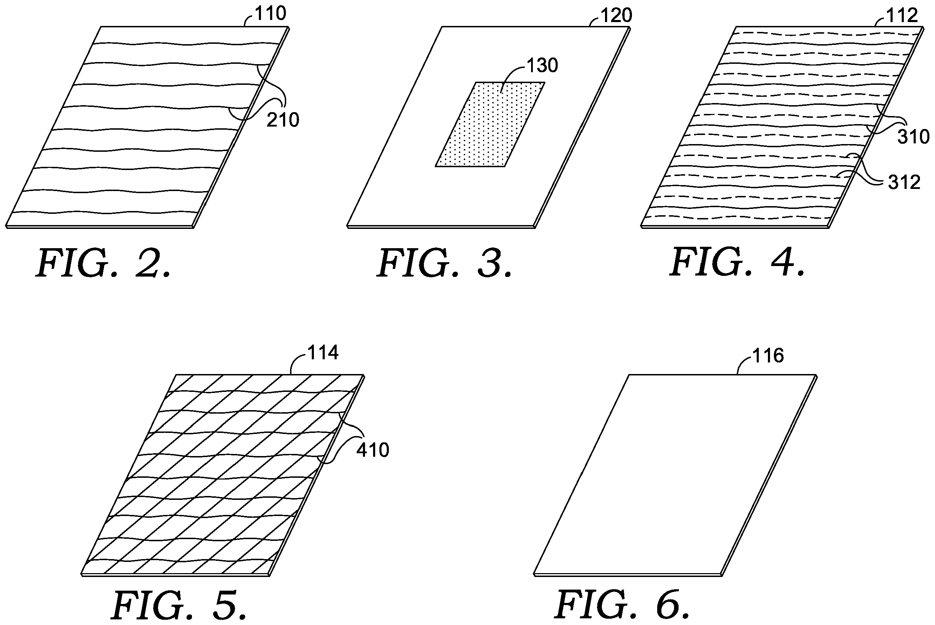

FIG. 2 depicts the first web of fibers 110 prior to being entangled with other webs and/or layered with other layers. In example aspects, properties associated with the first web of fibers 110 may be selected to achieve desired end properties for the printed composite nonwoven textile 150. As discussed above, when entangled with other webs and/or layered with other layers, it is contemplated herein that the first web of fibers 110 forms a first facing side of the printed composite nonwoven textile 150. When the printed composite nonwoven textile 150 is formed into an article of apparel, it is contemplated that the first facing side forms an outer-facing surface, and in some aspects an outermost-facing surface of the article of apparel. As such, desired properties associated with the first web of fibers 110 include, for example, durability and resistance to abrasion and coverage for modesty. In example aspects, the first web of fibers 110 has a basis weight of from about 20 grams per square meter (gsm) to about 150 gsm, from about 35 gsm to about 65 gsm, from about 40 gsm to about 60 gsm, from about 45 gsm to about 55 gsm, or about 50 gsm. Targeting a basis weight in this range for the first web of fibers 110 provides for the printed composite nonwoven textile 150 having a basis weight in a desired range after the first web of fibers 110 is combined with other webs and/or layers.

The first web of fibers 110 is formed of fibers, such as fibers 210 (depicted schematically) that may be oriented generally in a common direction due to a carding and cross-lapping process. In example aspects, the fibers 210 may include PET fibers (recycled or virgin) although other virgin and recycled fiber types are contemplated herein (e.g., polyamide, cotton, and the like). In one example aspect, the fibers 210 may include 100% by weight of recycled fibers such as 100% by weight of recycled PET fibers. However, in other aspects, the fibers 210 may include 100% by weight virgin fibers, or other combinations of virgin and recycled fibers, as desired. The staple length of the fibers 210 may range from about 40 mm to about 60 mm, from about 45 mm to about 55 mm, or about 51 mm. Use of this fiber length provides optimal entanglement. For instance, when below 40 mm, the fibers 210 may not have sufficient length to become entangled, and when above 60 mm, the fibers 210 may actually become un-entangled when the needle is withdrawn from the nonwoven textile during entanglement. In example aspects, the fibers 210 may comprise a uniform length such as when the fibers 210 are formed from virgin extruded PET or re-extruded PET and cut to a defined length. In other aspects, the fibers 210 may include a variation of staple length such as when the fibers 210 are derived from a shredded fiber source. Any and all aspects, and any variation thereof, are contemplated as being within aspects herein.

The fibers 210 may include a denier of greater than or equal to about 1.2 D, or from about 1.2 D to about 3.5 D, from about 1.2 D to about 1.7 D, from about 1.3 D to about 1.6 D, or about 1.5 D. Utilizing a denier within this range makes the fibers 210 less susceptible to breakage which, in turn, enhances the durability and abrasion resistance of the first facing side of the printed composite nonwoven textile 150. Moreover, selecting a denier within this range while still achieving the basis weight of the first web of fibers 110 provides good, uniform coverage of the first facing side which helps enhance the durability features of the first facing side. Selecting a denier of greater than, for instance 3.5 D while still maintaining the basis weight for the first web of fibers 110 may provide less coverage for the first facing side which may be desirable in some instances such as when it is desired to expose, or at least partially expose, the printed component.

In example aspects, the fibers 210 used to form the first web of fibers 110 may include a first color property. The first color property may be imparted to the fibers 210 during, for example, the extrusion process when the fibers 210 are being formed such that the fibers 210 are dope dyed. In one example aspect, the color property may be white although other colors are contemplated herein. Forming the printed composite nonwoven textile 150 using dope dyed fibers eliminates post-formation dyeing steps which further helps to reduce the carbon footprint of the printed composite nonwoven textile 150. In another example aspect, the fibers 210 may be configured such that the first web of fibers 110 is at least partially translucent. That is, the first web of fibers 110, pre-entanglement or post-entanglement, are such that the printed component 130 of the interior layer 120 of the printed composite nonwoven textile 150 is, at least in part, visible on the first facing side, through the first web of fibers 110.

FIG. 3 depicts the interior layer 120 having the printed component 130 prior to being entangled and/or layered with other webs and/or layers. In example aspects, properties associated with the interior layer 120 may be selected to achieve desired end properties of the printed component 130 and/or the printed composite nonwoven textile 150. Generally, the interior layer 120 may be configured such that it is compatible with at least one printing technique contemplated herein and is capable of including the printed component 130 with desirable aesthetic properties. In one example, the interior layer 120 has a first color property that is white and at least one face that is suitable for receiving one or more colored substances, which collectively form the printed component 130. In example aspects, the interior layer 120 may be a web of fibers formed of fibers having any selection of features related to fibers contemplated herein. In other example aspects, the interior layer 120 is a spunlace layer that has features configured for providing desired aesthetic properties to the printed component 130. Additional aspects related to the interior layer 120 are discussed with more detail below.

FIGS. 4-6 each depict an example web of fibers or an example layer that may be included in the one or more additional layers 140 of the printed composite nonwoven textile 150. FIG. 4 depicts a second web of fibers 112 prior to being entangled with other webs and/or layered with other layers. In example aspects, properties associated with the second web of fibers 112 may be selected to achieve desired end properties for the printed composite nonwoven textile 150. As discussed above, when entangled with other webs, it is contemplated herein that the second web of fibers 112 forms an opposite second facing side of the printed composite nonwoven textile 150. When the printed composite nonwoven textile 150 is formed into an article of apparel, it is contemplated herein that the second facing side forms an inner-facing surface, and in some aspects an innermost-facing surface of the article of apparel. As such, properties associated with the second web of fibers 112 include, for example, a soft hand or feel. In example aspects, the second web of fibers 112 has a basis weight of from about 20 gsm to about 150 gsm, from about 35 grams per square meter (gsm) to about 65 gsm, from about 40 gsm to about 60 gsm, from about 45 gsm to about 55 gsm, or about 50 gsm. In example aspects, the second web of fibers 112 has generally the same basis weight as the first web of fibers 110. Targeting a basis weight in this range for the second web of fibers 112 provides for the printed composite nonwoven textile 150 having a basis weight in a desired range after the second web of fibers 112 is combined with other webs and/or layered with other layers.

The second web of fibers 112 may be formed of two types of fibers, such as fibers 310 (depicted schematically) and fibers 312 (depicted schematically) that may be oriented generally in a common direction due to a carding and cross-lapping process. In example aspects, the fibers 310 and/or 312 may include PET fibers (recycled or virgin) although other virgin and recycled fiber types are contemplated herein (e.g., polyamide, cotton, and the like). In one example aspect, the fibers 310 and/or 312 may include 100% by weight of recycled fibers such as 100% by weight of recycled PET fibers. However, in other aspects, the fibers 310 and/or 312 may include 100% by weight virgin fibers, or other combinations of virgin and recycled fibers, as desired.

The fibers 312 are shown in dashed line to indicate that they have different features than the fibers 310. For example, the fibers 312 include silicone-coated fibers. The fibers 312 may be coated with silicone prior to incorporating the fibers 312 into the second web of fibers 112. In example aspects, the second web of fibers 112 may include about 10% to about 100% by weight of the fibers 312, about 40% by weight of the fibers 310 and about 60% by weight of the fibers 312, about 45% by weight of the fibers 310 and about 55% by weight of the fibers 312, about 50% by weight of the fibers 310 and about 50% by weight of the fibers 312, about 55% by weight of the fibers 310 and about 45% by weight of the fibers 312, or about 60% by weight of the fibers 310 and about 40% by weight of the fibers 312. When stating that the second web of fibers 112 may include about 100% by weight of the fibers 312, it is contemplated herein that the fibers 312 may be intermittently coated with silicone along their length. Utilizing the fibers 310 and the fibers 312 in the ranges above provides a good hand feel to the second face formed by the second web of fibers 112. It also provides a good drape to the printed composite nonwoven textile 150. Stated differently, the printed composite nonwoven textile 150 is not as stiff as traditional nonwovens used in the cleaning space and the personal hygiene space. Further, utilizing the fibers 310 and the fibers 312 in the ranges above may reduce the amount of needle force needed to entangle the web of fibers described herein since the silicone-coated fibers may move more easily during the entanglement process. When incorporating silicone-coated fibers below the ranges described above, the second facing side may feel dry and uncomfortable during wear. Conversely, when incorporating silicone-coated fibers above the ranges described above, the second facing side may feel slick which also may be unpleasant to a wearer. Moreover, using silicone-coated fibers above the ranges described above may make the carding process difficult since the card wires may not be able to frictionally engage with the fibers to achieve a uniform carded web. In addition, using silicone-coated fibers above the ranges described above may also fail to create adequate entanglement between the fibers since frictional forces are reduced due to the silicone thus impacting the structural integrity of the printed composite nonwoven textile 150.

Utilizing the silicone-coated fibers eliminates the need for adding a silicone finish to the printed composite nonwoven textile 150 in a post-processing step. As known in the textile space, it is common practice to add silicone softener finishes to knitted or woven products in a post-processing step. By eliminating this step, the carbon footprint of the printed composite nonwoven textile 150 is further reduced.

The staple length of each of the fibers 310 and 312 may range from about 40 mm to about 60 mm, from about 45 mm to about 55 mm, or about 51 mm. Similar to the fibers 210, this length may provide for optimal entanglement. In example aspects, the fibers 310 and/or 312 may comprise a uniform length such as when the fibers are formed from virgin extruded PET or re-extruded PET and cut to a defined length. In other aspects, the fibers 310 and/or 312 may include a variation of staple length such as when the fibers 310 and/or 312 are derived from a shredded fiber source. Any and all aspects, and any variation thereof, are contemplated as being within aspects herein.

Each of the fibers 310 and 312 may include a denier of less than or equal to about 1 D. For example, the denier may be about 0.1 D, about 0.2 D, about 0.3 D, about 0.4 D, about 0.5 D, about 0.6 D, about 0.7 D, about 0.8 D, or about 0.9 D. In example aspects, the denier of the fibers 310 and 312 may be from about 0.6 D to about 1 D, from about 0.7 D to about 0.9 D, or about 0.8 D. Utilizing a denier within this range helps to provide a soft feel or hand to the second facing side formed from the second web of fibers 112. Moreover, selecting a denier within this range while still achieving the basis weight of the second web of fibers 112 provides good coverage of the second facing side.

In example aspects, each of the fibers 310 and 312 used to form the second web of fibers 112 may include a color property which may be the same or different. In example aspects, both of the fibers 310 and 312 include the first color property of the fibers 210. Similar to the fibers 210, each of the fibers 310 and 312 may be dope dyed further reducing the need for post-processing dyeing steps for the printed composite nonwoven textile 150.

FIG. 5 depicts an optional third web of fibers 114 prior to being entangled with other webs and/or layered with other layers. When incorporated into the printed composite nonwoven textile 150 as part of the one or more additional layers 140, it is contemplated herein that the third web of fibers 114 is positioned between the first web of fibers 110 and the second web of fibers 112. In example aspects, properties associated with the third web of fibers 114 may be selected to achieve desired end properties for the printed composite nonwoven textile 150. In example aspects, the third web of fibers 114 may be incorporated into the printed composite nonwoven textile 150 to achieve a desired basis weight for the printed composite nonwoven textile 150, to achieve a desired thickness for the printed composite nonwoven textile 150, to achieve a desired insulation property for the printed composite nonwoven textile 150, to achieve a desired pile for the printed composite nonwoven textile 150, and the like. As explained further below, to impart a visual aesthetic to the printed composite nonwoven textile 150, fibers forming the third web of fibers 114 may having a different color property than fibers used to form the first web of fibers 110 and the second web of fibers 112. Similar to the first web of fibers 110 and the second web of fibers 112, the third web of fibers 114 has a basis weight of from 20 gsm to about 150 gsm, from about 35 grams per square meter (gsm) to about 65 gsm, from about 40 gsm to about 60 gsm, from about 45 gsm to about 55 gsm, or about 50 gsm. Targeting a basis weight in this range for the third web of fibers 114 provides for the printed composite nonwoven textile 150 having a basis weight in a desired range after the third web of fibers 114 is combined with other webs and/or layers.

The third web of fibers 114 is formed of fibers, such as fibers 410 (depicted schematically) that may be oriented generally in a common direction due to a carding and cross-lapping process. In example aspects, the fibers 410 may include PET fibers (recycled or virgin) although other virgin and recycled fiber types are contemplated herein (e.g., polyamide, cotton, and the like). In one example aspect, the fibers 410 may include 100% by weight of recycled fibers such as 100% by weight of recycled PET fibers. However, in other aspects, the fibers 410 may include 100% by weight virgin fibers, or other combinations of virgin and recycled fibers, as desired. Similar to the fibers 210, 310 and 312, the staple length of the fibers 410 may range from about 40 mm to about 60 mm, from about 45 mm to about 55 mm, or about 51 mm. In example aspects, the fibers 410 may comprise a uniform length such as when the fibers are formed from virgin extruded PET or re-extruded PET and cut to a defined length. In other aspects, the fibers 410 may include a variation of staple length such as when the fibers 410 are derived from a shredded fiber source. Any and all aspects, and any variation thereof, are contemplated as being within aspects herein.

The fibers 410 may include a denier of greater than or equal to about 1.2, from about 1.2 D to about 3.5 D, from about 1.3 D to about 1.6 D, or about 1.5 D. Utilizing a denier within this range makes the fibers 410 less susceptible to breakage which, in turn, enhances the durability and abrasion resistance of the printed composite nonwoven textile 150. Since the third web of fibers 114, when used, is positioned between the first web of fibers 110 and the second web of fibers 112, having a soft hand is not as important as, for example, the second web of fibers 112. Selecting a denier within this range while still achieving the basis weight of the third web of fibers 114 enhances the overall coverage and/or opacity of the printed composite nonwoven textile 150.

In some aspects, the fibers 410 used to form the third web of fibers 114 may include a second color property different from the first color property. This is illustratively depicted in FIG. 5 through the use of diagonal shading lines. It is contemplated herein that the fibers 410 are dope dyed further reducing the carbon footprint of the printed composite nonwoven textile 150. As will be explained in greater detail below, during the entanglement of the first, second, and third webs of fibers 110, 112 and 114, the fibers 410 may be moved more toward one facing side than the other facing side such that the second color property is visually discernible or distinguishable to a greater degree on the one facing side compared to the other facing side. It is contemplated herein that the fibers 210 of the first web of fibers 110, the fibers 310 of the second web of fibers 112, and the fibers 410 of the third web of fibers 114 are not coated with silicone.

FIG. 6 depicts an elastomeric layer 116 that may be included as part of the one or more additional layers 140. In example aspects, the elastomeric layer 116 may have a basis weight from about 20 gsm to about 150 gsm, from about 50 gsm to about 70 gsm, from about 55 gsm to about 65 gsm, or about 60 gsm. The basis weight of the elastomeric layer 116 may be selected to achieve a desired basis weight for the printed composite nonwoven textile 150. Aspects herein contemplate forming the elastomeric layer 116 from a thermoplastic elastomer such as a thermoplastic polyurethane (TPU), a thermoplastic polyether ester elastomer (TPEEE), combinations of TPU and TPEEE, and the like. The elastomeric layer may include a spunbond layer, a film, a web, and the like. In a particular example aspect, the elastomeric layer 116 may comprise a TPEE spunbond layer. In some example aspects, it has been found that a spunbond layer better withstands the needling process while maintaining stretch and recovery properties compared to, for example, films. In general, the elastomeric layer 116 is selected to provide desirable stretch and recovery properties to the printed composite nonwoven textile 150 while generally maintaining structural integrity during the entanglement process. It is contemplated herein that the elastomeric layer 116 has a color property. In example aspects, the color property may be the first color property associated with the fibers 210, 310, and 312, although other color properties are contemplated herein.

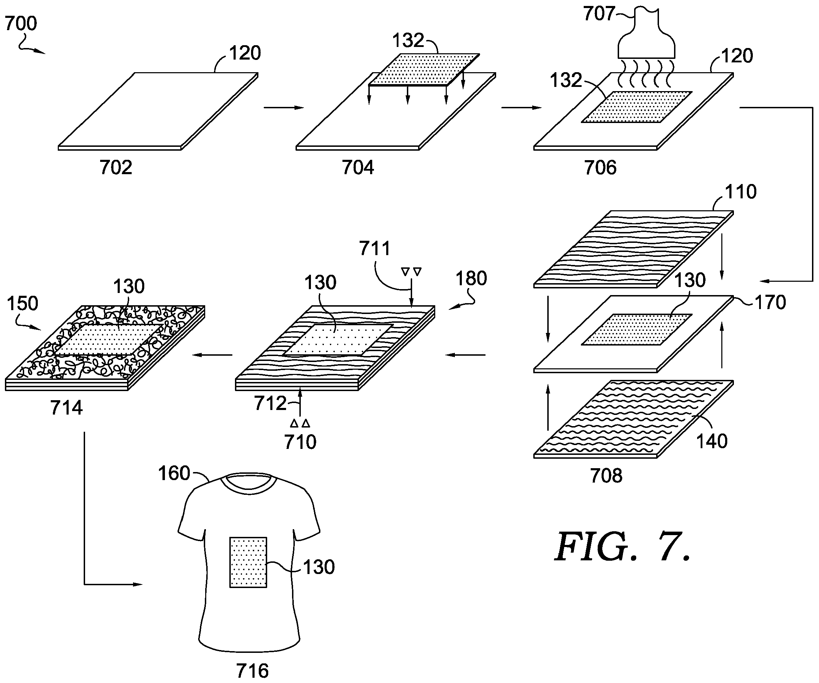

FIG. 7 illustrates an example manufacturing process, referenced generally by the numeral 700, for use in making the example printed composite nonwoven textile 150 and for incorporating the same into the article of apparel 160. The depiction of the manufacturing components in FIG. 7 is illustrative only and is meant to convey general features of individual steps of the manufacturing process 700. In addition, while the steps are depicted as being performed in a sequential order, aspects herein contemplate that the manufacturing process 700 may include any combination of one or more steps, any of which may be repeated or performed in a different order than as depicted. At a high level, FIG. 7 depicts several individual steps of the manufacturing process 700 that include utilizing a printing technique to form the printed component 130 on the interior layer 120 to form a printed layer 170, positioning a first face of the printed layer 170 adjacent to a second face of the first web of fibers 110 to form a composite structure 180, subjecting the composite structure 180 to an entanglement process to form the printed composite nonwoven textile 150, and incorporating the printed composite nonwoven textile 150 into the article of apparel 160.

Beginning with a step 702, the interior layer 120 is obtained and/or provided. At a step 704, a printing technique is utilized to form the printed component 130, which is generically depicted as a colored substance 132 being applied to a first face of the interior layer 120. A step 706 depicts an optional and/or additional step related to the utilized printing technique, and in this example, the step 706 generically depicts a curing process in which the applied colored substance 132 and the interior layer 120 are subjected to heat generated by a heat source 707. At a step 708, the first face of the printed layer 170 is positioned adjacent to the second face of the first web of fibers 110, and in an optional substep, an opposite second face of the printed layer 170 is positioned adjacent to a first face of the one or more additional layers 140. The first web of fibers 110 and the printed layer 170 form the composite structure 180, which may optionally include the one or more additional layers 140.

A step 710 generically depicts subjecting the composite structure 180 to an entanglement process that includes a first condition 711 and a second condition 712. In an example aspect, the first condition 711 is a first pass of needlepunching associated with a first set of parameters, and the second condition 712 is a second pass of needlepunching associated with a second set of parameters. The first and second conditions 711, 712 are illustrative only, and it is contemplated herein than more or less needle passes may be used to achieve a desired printed composite nonwoven textile. In other example aspects, the entanglement process comprises a variable entanglement process, which may be a process including one or more conditions that are configured to entangle fibers at different portions of the composite structure 180 in differing manners. As depicted at a step 714, upon completion of the entanglement process, the composite structure 180 is formed into the printed composite nonwoven textile 150. At a step 716, the printed composite nonwoven textile 150 is then incorporated into the article of apparel 160. Additional aspects related to steps of the manufacturing process 700 are discussed with more detail below in connection with example configurations of the printed layer170 and the printed composite nonwoven textile 150.

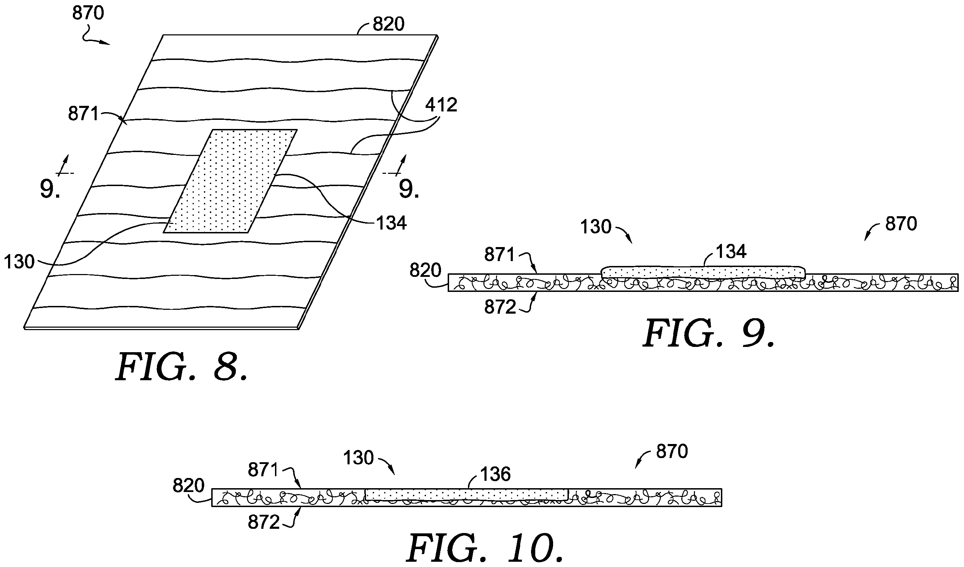

FIG. 8 depicts an example printed layer 870 prior to being combined with the first web of fibers 110 and/ the one or more additional layers 140. As shown, the printed layer 870 has a first face 871 and includes an interior web of fibers 820 and the printed component 130. In aspects, the interior web of fibers 820 has one or more features that are similar to the third web of fibers 114, and thus, fibers 412 that form the interior web of fibers 820 may also include one or more features that are similar to the fibers 410. However, in this example, the fibers 412 are depicted as having a different color property than the fibers 410, and it is contemplated that the color property of the fibers 412 may be configured such that the printed component 130 is visually discernible or distinguishable from the interior web of fibers 820. In one example aspect, the color property of the fibers 412 may be white, and in other example aspects, the color property may be grey or lighter shades of red, orange, yellow, green, blue, indigo, or violet. The fibers 412 may be dope dyed, and during entanglement with other webs of fibers, the fibers 412 may be moved more toward one face than the other face such that the color property is visually discernible or distinguishable to a greater degree on the one facing side that the other facing side. It is also contemplated herein that the fibers 412 are not coated with silicone.

Other example aspects contemplate that, like the third web of fibers 114, properties associated with the interior web of fibers 820 may be selected to achieve desired end properties for the printed composite nonwoven textile 150. In example aspects, the interior web of fibers 820 may be incorporated into the printed composite nonwoven textile 150 to achieve a desired basis weight, a desired thickness, a desired insulation property, a desired pile, and the like. Similar to the third web of fibers 114, the interior web of fibers 820 has a basis weight of from about 20 gsm to about 150 gsm, from about 35 grams per square meter (gsm) to about 65 gsm, from about 40 gsm to about 60 gsm, from about 45 gsm to about 55 gsm, or about 50 gsm. Targeting a basis weight in this range for the interior web of fibers 820 provides for the printed composite nonwoven textile 150 having a basis weight in a desired range after the interior web of fibers 820 is combined with other webs and/or layers.

As mentioned, the interior web of fibers 820 is formed of fibers, such as the fibers 412 (depicted schematically) that may be oriented generally in a common direction due to a carding and cross-lapping process. In example aspects, the fibers 412 may include PET fibers (recycled or virgin) although other virgin and recycled fiber types are contemplated herein (e.g., polyamide, cotton, and the like). In one example aspect, the fibers 412 may include 100% by weight of recycled fibers such as 100% by weight of recycled PET fibers. However, in other aspects, the fibers 412 may include 100% by weight virgin fibers, or other combinations of virgin and recycled fibers, as desired. Similar to the fibers 410, the staple length of the fibers 412 may range from about 40 mm to about 60 mm, from about 45 mm to about 55 mm, or about 51 mm. In example aspects, the fibers 412 may comprise a uniform length such as when the fibers are formed from virgin extruded PET or re-extruded PET and cut to a defined length. In other aspects, the fibers 412 may include a variation of staple length such as when the fibers 412 are derived from a shredded fiber source. Any and all aspects, and any variation thereof, are contemplated as being within aspects herein.

The fibers 412 may include a denier of greater than or equal to about 1.2 D, from about 1.2 D to about 3.5 D, from about 1.3 D to about 1.6 D, or about 1.5 D. Utilizing a denier within this range makes the fibers 412 less susceptible to breakage which, in turn, enhances the durability and abrasion resistance of the printed composite nonwoven textile 150. Since the interior web of fibers 820, when used, is positioned between the first web of fibers 110 and the second web of fibers 112, having a soft hand is not as important as, for example, the second web of fibers 112. Selecting a denier within this range while still achieving the basis weight of the interior web of fibers 820 enhances the overall coverage and/or opacity of the printed composite nonwoven textile 150.

As shown in FIG. 8, the printed component 130 is formed of a colorant 134 that is applied to the first face 871 via a digital printing process. As discussed, the colorant 134 may afford one or more color properties to the printed component 130 such as red, orange, yellow, green, blue, indigo, violet, and/or shades thereof. Moreover, the printed component 130 is located at one or more regions (not identified) of the interior web of fibers 820, and even though the printed component 130 is depicted as a rectangle, example aspects herein contemplate that the printed component 130 may comprises an image, graphic, design, visual indicia, one or more shapes including shapes associated with branding such as logos, geometric shapes, organic shapes, patterns, letters, numbers, and the like.

FIG. 9 depicts a cross section of the printed layer 870 of FIG. 8. As shown, the colorant 134 that forms the printed component 130 is located on the first face 871 of the printed layer 870 and partially extends through the interior web of fibers 820 towards an opposite second face 872 of the printed layer 870. While the colorant 134 is shown as being clearly delineated on the first face 871 and the interior web of fibers 820, it is to be understood that this depiction of the colorant 134 is illustrative. Thus, aspects herein contemplate that the colorant 134 may be included in the printed layer 870 in a manner that is less delineated and/or irregular. It is further contemplated that the colorant 134 may include portions that are affixed to and/or at least partially absorbed by the fibers 412 of the interior web of fibers 820 and may also include other portions that are unattached to the fibers 412.

FIG. 10 depicts an alternative cross-section of the printed layer 870 in which the printed component is formed of a sublimation dye 136 instead of the colorant. As such, the sublimation dye 136 may be applied to the first face 871 via a sublimation printing process. Due to differences between the sublimation printing process and the digital printing process, as well as differences between the sublimation dye 136 and the colorant 134, the sublimation dye 136 is included in the printed layer 870 in a different manner than the colorant 134. As shown, the sublimation dye 136 is more absorbed into the printed layer 870. That is, the sublimation dye 136 does not extend above the first face 871 and extends partially through the interior web of fibers 820 to a greater extent that the colorant 134. Again, like FIG. 9, the depiction of the sublimation dye 136 as being clearly delineated on the first face 871 and throughout the interior web of fibers 820 is illustrative, and aspects herein contemplate that the sublimation dye 136 may be included in the printed layer 870 in a manner that is less delineated and/or irregular. It is also contemplated that the sublimation dye 136 may include portions that are bonded with, affixed to, and/or at least partially absorbed by the fibers 412 of the interior web of fibers 820 and may also include other portions that are unattached to and/or discrete from the fibers 412.

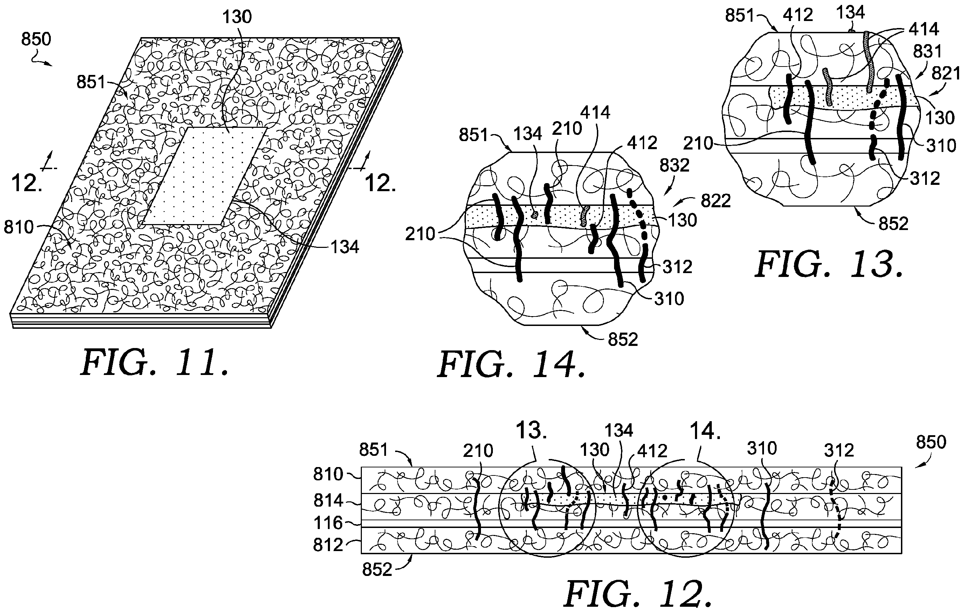

FIGS. 11-14 illustrate aspects of an example printed composite nonwoven textile 850 that is formed subsequent to performing an entanglement process on the first web of fibers 110, the printed layer 870 (e.g., the interior web of fibers 820 including the printed component 130), the second web of fibers 112, and the elastomeric layer 116. FIG. 11 depicts a first facing side 851 of the printed composite nonwoven textile 850 that is formed, at least in part, by a first entangled web of fibers 810. As best shown in FIG. 12, which depicts a cross-section of the printed composite nonwoven textile 850, the first entangled web of fibers 810 includes the fibers 210 from the first web of fibers 110, the fibers 310 and 312 from the second web of fibers 112, and the fibers 412 from the interior web of fibers 820. Moreover, a second facing side 852 of the printed composite nonwoven textile 850 is formed, at least in part, by a second entangled web of fibers 812 that primarily includes the fibers 310 and 312. Further, an interior entangled web of fibers 814 that primarily includes the fibers 412 is positioned between the first and second entangled webs of fibers 810, 812. The interior entangled web of fibers 814 also includes the printed component 130 on a first face, which is positioned adjacent to a second face of the first entangled web of fibers 810. Further, the elastomeric layer 116 is also positioned between the first and second entangled webs of fibers 810, 812 and is adjacent to the interior entangled web of fibers 814.

In example aspects, due to entanglement parameters, features of the fibers 412, and/or features of the colorant 134, the printed component 130 at least partially shows through the first entangled web of fibers 810 such that the printed component 130 is visible on the first facing side 851 of the printed composite nonwoven textile 850. Additionally, for to the same reasons, different regions of the interior entangled web of fibers 814 and different portions of the printed component 130 are incorporated into the first entangled web of fibers 810 in differing manners. In example aspects, the first entangled web of fibers 810 may be at least partially translucent. In other example aspects, parameters of the entanglement process may be configured such that the discrete particles of the colorant and/or the sublimation dye, as well as fibers including the colorant and/or the sublimation dye that form the printed component 130 are migrated to the first entangled web of fibers 810 and/or the first facing side 851.

FIG. 13 depicts a magnified view of the cross-section of the printed composite nonwoven textile 850 of FIG. 12. In FIG. 13, a first region 821 of the interior entangled web of fibers 814 is illustrated, and an example configuration of the fibers 210, 310, 312, 412 and the printed component 130 is shown. The first region 821 includes a first portion 831 of the printed component 130, and at the first region 821, at least some of the colorant 134 is affixed to the fibers 412 to form fibers 414. Moreover, the fibers 412 and 414, as well as the fibers 310 and 312, are incorporated into the first entangled web of fibers 810. The fibers 414 are incorporated such that at least one of the fibers 414 extends to the first facing side 851 of the printed composite nonwoven textile 850. Further, the first portion 831 of the printed component 130 includes at least some discrete particles of the colorant 134 that are not affixed to the fibers 412. As such, at the first region 821, the first facing side 851 is formed, at least in part, by the colorant 134 at the first portion of the printed component 130 and the fibers 414.

FIG. 14 depicts a magnified view of the cross-section of the printed composite nonwoven textile 850 of FIG. 12. In FIG. 14, a second region 822 of the interior entangled web of fibers 814 is illustrated, and an example configuration of the fibers 210, 310, 312, 412 and the printed component 130 is shown. The second region 822 includes a second portion 832 of the printed component 130, and similar to the first region 821, in the second region 822 the colorant 134 is affixed to the fibers 412 to form fibers 414 and is also included as discrete particles that are not affixed to the fibers 412. However, unlike the first region 821, the fibers 412 and 414 are excluded from the first entangled web of fibers 810 at the second region 822. The fibers 210, 310, and 312 have a similar configuration in both the first and second regions 821, 822. Specifically, at least some of the fibers 210 extend into the interior entangled web of fibers 814, while others further extend through the interior entangled web of fibers 814 and the elastomeric layer 116 into the second entangled web of fibers 812. Further, a least some of the fibers 310 and 312 extend through the elastomeric layer 116 and the interior entangled web of fibers 814 and into the first entangled web of fibers 810.

In example aspects, one or more of the fibers 210, 310, 312, 412, 414 and/or the printed component 130 may have different configurations at different portions of the printed composite nonwoven textile 850. As shown in FIGS. 13 and 14, a degree of entanglement of the interior entangled web of fibers 814 with the first entangled web of fibers 810 is greater at the first region 821 than at the second region 822. As used herein, degree of entanglement refers to an amount of fibers of one entangled web of fibers that are mechanically entangled with and/or incorporated into another entangled web of fibers at a unit area in the printed composite nonwoven textile. Thus, at a unit area, defined herein as a 1 cm x 1 cm area (cm²) of the printed composite nonwoven textile, in the first region 821 of the interior entangled web of fibers 814, a greater amount of the fibers 412, 414 are entangled with the fibers 210 and/or the first entangled web of fibers 810 than at a unit area in the second region 822 of the interior entangled web of fibers 814. Described differently, a greater amount of the fibers 412, 414 are excluded from and/or mechanically independent of the first entangled web of fibers 810 at the unit area in the second region 822 than at the unit area in the first region 821.

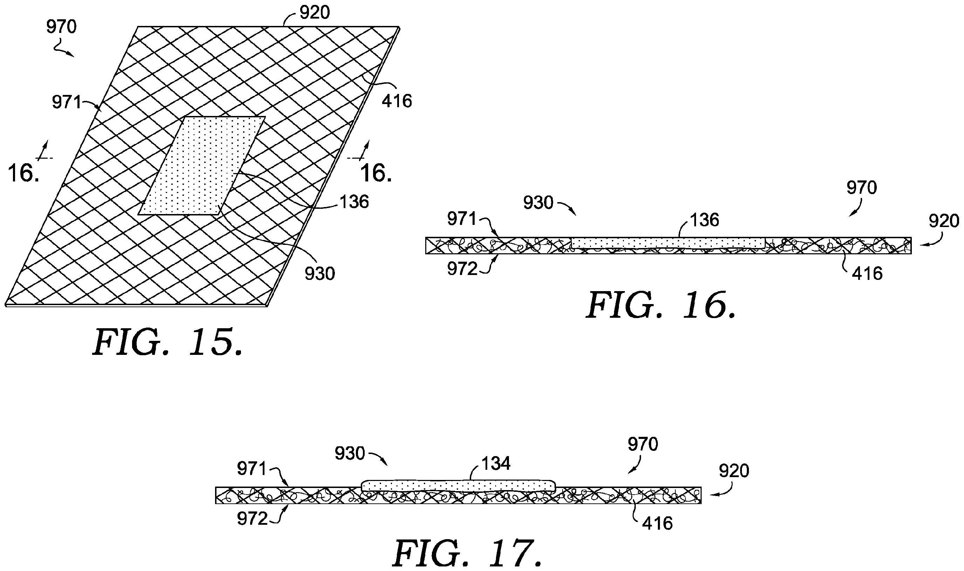

FIG. 15 depicts an example printed layer 970 prior to being combined with the first web of fibers 110 and/ the one or more additional layers 140. As shown, the printed layer 970 has a first face 971 and includes a spunlace layer 920 and the printed component 130. In aspects, the spunlace layer 920 is configured to provide a desired aesthetic to the printed component 130, and thus, the spunlace layer 920 may include one or more features that make it suitable for printing and for retaining the printed component 130. In example aspects, the spunlace layer 920 may be configured such that the printed component 130 is visually discernible or distinguishable from the spunlace layer 920. In one example aspect, the color property of the spunlace layer 920 may be white, and in other example aspects, the color property may be grey or lighter shades of red, orange, yellow, green, blue, indigo, or violet. In other example aspects, the spunlace layer 920 may include spunlace fibers, which may be in the form of a web. In another example aspect, the spunlace layer 920 may have a basis weight from about 20 gsm to about 150 gsm, from about 30 gsm to about 50 gsm, from about 35 gsm to about 45 gsm, or about 40 gsm.

In additional example aspects, it is contemplated that the spunlace layer 920 may be formed of PET. Such aspects also contemplate that the spunlace layer 920 includes PET fibers (recycled or virgin) although other virgin and recycled fiber types are contemplated herein (e.g., polyamide, cotton, and the like). In one example aspect, fibers of the spunlace layer 920 may include 100% by weight of recycled fibers such as 100% by weight of recycled PET fibers. However, in other aspects, the fibers of the spunlace layer 920 may include 100% by weight virgin fibers, or other combinations of virgin and recycled fibers, as desired. In further aspects, the staple length of fibers of the spunlace layer 920 may be longer than a staple length of fibers included in other webs of fibers of the printed composite nonwoven textile 950. In one example aspect, fibers of the spunlace layer 920 may include a variation of staple length, and in other example aspects, fibers of the spunlace layer 920 may be continuous throughout the spunlace layer 920. Further aspects contemplate that fibers of the spunlace layer 920 may include a denier that is configured to afford the spunlace layer 920 properties that provide a desired aesthetic to the printed component 130. In another example aspect, fibers of the spunlace layer 920 may be configured to afford hydrophobic properties to the spunlace layer 920 and in turn, the printed composite nonwoven textile 950. Any and all aspects, and any variation thereof, are contemplated as being within aspects herein.

Returning to the example of FIG. 15, the printed component 130 is formed of the sublimation dye 136 that is applied to the first face 971 via a sublimation printing process. As discussed, the sublimation dye 136 may afford one or more color properties to the printed component 130 such as red, orange, yellow, green, blue, indigo, violet, and/or shades thereof. Moreover, the printed component 130 is located at one or more regions (not identified) of the spunlace layer 920, and even though the printed component 130 is depicted as a rectangle, example aspects herein contemplate that the printed component 130 may comprise an image, graphic, design, visual indicia, one or more shapes including shapes associated with branding such as logos, geometric shapes, organic shapes, patterns, letters, numbers, and the like.

FIG. 16 depicts a cross-section view of the printed layer 970 of FIG. 15. As shown, the sublimation dye 136 is applied to the first face 971 and is at least partially absorbed by the spunlace layer 920 towards an opposite second face 972 of the printed layer 970. While the sublimation dye 136 is shown as being clearly delineated on the first face 971 and throughout the printed layer 970, it is to be understood that this depiction of the sublimation dye 136 is illustrative. Thus, aspects herein contemplate that the sublimation dye 136 may be included in the printed layer 970 in a manner that is less delineated and/or irregular. It is also contemplated that the sublimation dye 136 may include portions that are bonded with, affixed to, and/or at least partially absorbed by the spunlace layer 920 and fibers thereof and may also include other portions that are unattached to and/or discrete from the spunlace layer 920 and fibers thereof.

FIG. 17 depicts an alternative cross-section of the printed layer 970 in which the printed component 130 is formed of the colorant 134 instead of the sublimation dye 136. As such, the colorant 134 may be applied to the first face 971 via a digital printing process. Due to differences between the digital printing process and the sublimation printing process, as well as differences between the colorant 134 and the sublimation dye 136, the colorant 134 is included in the printed layer 970 in a different manner than the sublimation dye 136. As shown, the colorant 134 partially extends above the first face 971 of the printed layer 970 and partially extends through the spunlace layer 920 towards an opposite second face 972 of the printed layer 970. While the colorant 134 is shown as being clearly delineated on the first face 971 and the spunlace layer 920, it is to be understood that this depiction of the colorant 134 is illustrative. Thus, aspects herein contemplate that the colorant 134 may be included in the printed layer 970 in a manner that is less delineated and/or irregular. It is further contemplated that the colorant 134 may include portions that are affixed to and/or at least partially absorbed by the spunlace layer 920 and fibers thereof and may also include other portions that are unattached to the spunlace layer 920 and fibers thereof.

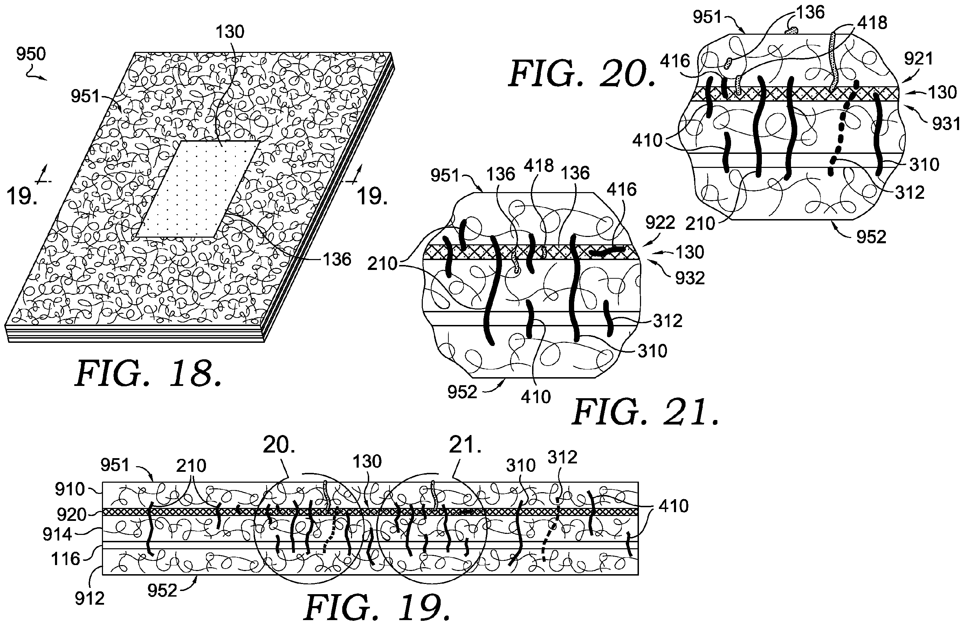

FIGS. 18-21 illustrate aspects of an example printed composite nonwoven textile 950 that is formed subsequent to performing an entanglement process on the first web of fibers 110, the printed layer 970 (e.g., the spunlace layer 920 including the printed component 130), the second web of fibers 112, the third web of fibers 114, and the elastomeric layer 116. FIG. 18 depicts a first facing side 951 of the printed composite nonwoven textile 950 that is formed, at least in part, by a first entangled web of fibers 910. As best shown in FIG. 19, which depicts a cross-section of the printed composite nonwoven textile 950, the first entangled web of fibers 910 includes the fibers 210 from the first web of fibers 110, the fibers 310 and 312 from the second web of fibers 112, and the fibers 410 from the third web of fibers 114. Moreover, a second facing side 952 of the printed composite nonwoven textile 950 is formed, at least in part, by a second entangled web of fibers 912 that primarily includes the fibers 310 and 312. A third entangled web of fibers 914 that primarily includes the fibers 410 is positioned between the first and second entangled webs of fibers 910, 912. The spunlace layer 920 is positioned between the first and third entangled webs of fibers 910, 914 and also includes the printed component 130 on a first face, which is positioned adjacent to a second face of the first entangled web of fibers 910. Further, the elastomeric layer 116 is positioned between the second and third entangled webs of fibers 912, 914.

In example aspects, due to entanglement parameters, features of the fibers 110, the spunlace layer 920, and/or features of the sublimation dye 136, the printed component 130 at least partially shows through the first entangled web of fibers 910 such that the printed component 130 is visible on the first facing side 951 of the printed composite nonwoven textile 950. Additionally, due to the same reasons, different regions of the spunlace layer 920 and different portions of the printed component 130 are incorporated into the first entangled web of fibers 910 in differing manners.

FIG. 20 depicts a magnified view of the cross-section of the printed composite nonwoven textile 950 of FIG. 19. In FIG. 20, a first region 921 of the spunlace layer 920 is illustrated, and an example configuration of the fibers 210, 310, 312, 410, fibers 416 of the spunlace layer 920, and the printed component 130 is shown. The first region 921 includes a first portion 931 of the printed component 130, and at the first region 921, at least some of the sublimation dye 136 is affixed to the fibers 416 to form fibers 418. Moreover, the fibers 416 and 418, as well as the fibers 310, 312, 410 are incorporated into the first entangled web of fibers 910. The fibers 418 are incorporated such that at least one of the fibers 418 extends to the first facing side 951 of the printed composite nonwoven textile 950. Further, the first portion 931 of the printed component 130 includes at least some discrete particles of the sublimation dye 136 that are not affixed to the fibers 416. As such, at the first region 921, the first facing side 951 is formed, at least in part, by the sublimation dye 136 at the first portion 931 of the printed component 130 and the fibers 418.

FIG. 21 depicts a magnified view of the cross-section of the printed composite nonwoven textile 950 of FIG. 19. In FIG. 21, a second region 922 of the spunlace layer 920 is illustrated, and an example configuration of the fibers 210, 310, 312, 410, 416, 418 and the printed component 130 is shown. The second region 922 includes a second portion 932 of the printed component 130, and similar to the first region 921, in the second region 922 the sublimation dye 136 is affixed and/or bonded to the fibers 416 to form fibers 418 and is also included as discrete particles that are not affixed to the fibers 416. However, unlike the first region 921, the fibers 416 and 418 are excluded from the first entangled web of fibers 910 at the second region 922. The fibers 210, 310, 312, 410 have a similar configuration in both the first and second regions 921, 922. Specifically, at least some of the fibers 210 extend throughout the spunlace layer 920 and into the third entangled web of fibers 914, while others further extend through the elastomeric layer 116 and into the second entangled web of fibers 912. Moreover, a least some of the fibers 310 and 312 extend through the elastomeric layer 116, the third entangled web of fibers 914, and the spunlace layer 920 into the first entangled web of fibers 910. Further, at least some of the fibers 410 extend through the spunlace layer 920 and into the first entangled web of fibers 910, while others extend thought the elastomeric layer 116 and into the second entangled web of fibers 912.

In example aspects, one or more of the fibers 210, 310, 312, 412, 416, 418 and/or the first and second portions 931, 932 of the printed component 130 may have different configurations at different portions of the printed composite nonwoven textile 950. As shown in FIGS. 20 and 21, the first portion 931 of the printed component 130 is more incorporated into the first entangled web of fibers 910 than the second portion 932 of the printed component 130. More specifically, a unit area of the first entangled web of fibers 910 that is adjacent to the first region 921 of the spunlace layer 920 (e.g., a first unit area) includes a greater amount of the fibers 418 and sublimation dye 136 than a unit area of the first entangled web of fibers 910 that is adjacent to the second region 922 of the spunlace layer 920 (e.g., a second unit area). As the first portion and the second portion 931, 932 of the printed component 130 are respectively included at the first and second regions 921, 922 of the spunlace layer 920, the first unit area, in turn, includes an amount of the first portion 931 of the printed component 130 (e.g., the fibers 418, sublimation dye 136 and discrete particles thereof) that is greater than an amount of the second portion 932 of the printed component 130 included in the second unit area. Described differently, the second portion 932 of the printed component 130 is excluded from at least part of the second unit area of first entangled web of fibers 910, while the first portion 931 of the printed component 130 is present in a majority of the first unit area of the first entangled web of fiber 910.

It is to be understood that aspects herein may be depicted by the FIGS. in an illustrative and/or simplified fashion for explanatory purposes. Such depictions are not limiting, and aspects contemplated herein may differ from the examples shown in the FIGS. For instance, in FIGS. 12-14 and 19-21, individual fibers are shown at specific portions of the printed composite nonwoven textiles 850, 950 and are depicted in a different manner at each specific portion to illustrate aspects related to differences in mechanical entanglement and/or incorporation of fibers of the entangled webs of fibers and/or layers throughout the printed composite nonwoven textiles 850, 950. As such, aspects herein contemplate that fibers of the entangled webs of fibers and/or layers may be included in the printed composite nonwoven textiles 150, 850, 950 in multiple manners, which may differ from the examples of FIGS. 12-14 and 19-21. In one aspect, at least some of the fibers 210 of the first entangled web of fibers 810 are incorporated into an interior layer (e.g., the printed layer 870; the interior entangled web of fibers 814 and the printed component 130) of the printed composite nonwoven textile 850. In another aspect, at least some of the fibers 210 of the first entangled web of fibers 910 are incorporated into an interior layer (e.g., the printed layer 970; the spunlace layer 920 and the printed component 130) of the printed composite nonwoven textile 950.

In accordance with aspects herein, fibers of the entangled webs of fibers and/or layers may be included in the printed composite nonwoven textiles 150, 850, 950 in a desired manner by selecting properties associated with the webs of fibers and/or layers (e.g., number of webs and/or layers; basis weight of each individual web and/or layer; fiber type(s) and percentage by weight, fiber denier, fiber length, and/or fiber coating of each individual web; material type of each individual layer, and the like), an arrangement of the webs of fibers and/or layers in the composite structure, a printing technique and parameters associated therewith (e.g., digital printing, sublimation printing, and the like), and/or an entanglement process and parameters associated therewith (e.g., mechanical entanglement, stitch density, penetration depth, needle entanglement, and the like). As such, fibers of the entangled webs of fibers and/or layers may be included at different portions of the printed composite nonwoven textiles 150, 850, 950 in varying manners. For instance, at one portion of the printed composite nonwoven textiles 150, 850, 950, fibers of the entangled webs of fibers and/or layers may have a configuration that is different than that of fibers at another, different portion, and as a result, fibers of one entangled web of fibers and/or layer may have a greater or lesser entanglement with and/or be more or less incorporated into fibers of another entangled web of fibers and/or layer at different portions of the printed composite nonwoven textile. Further, the printed component and/or any portions thereof that are included on fibers of an entangled web of fibers and/or layer may also be more or less incorporated into fibers of another entangled web of fibers and/or layer at different portions of the printed composite nonwoven textile.

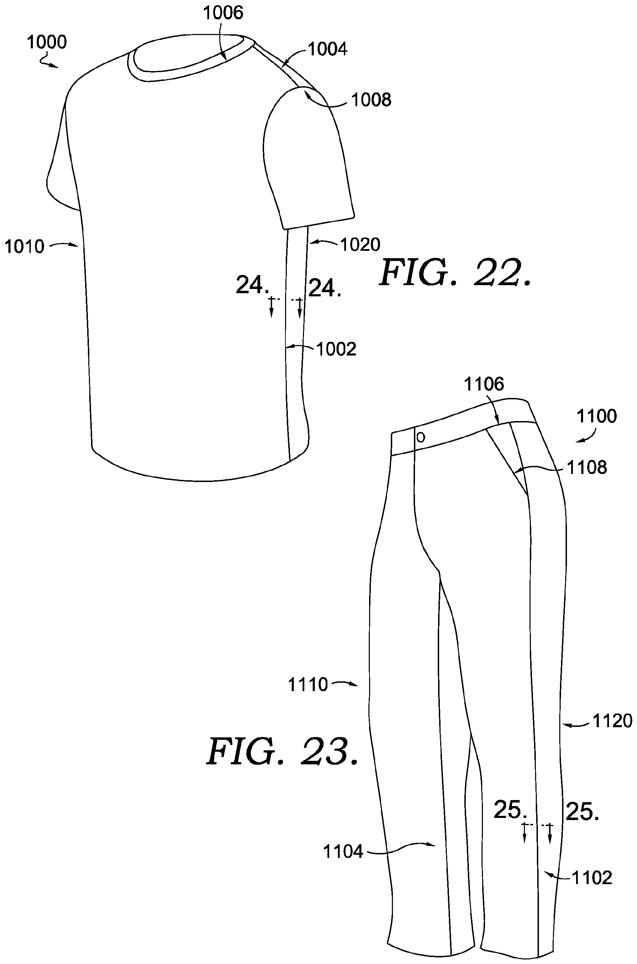

FIG. 22 illustrates an example upper body article of apparel 1000 that is in the form of an upper body garment with short sleeves although other configurations are contemplated herein such as a jacket, a hoodie, a long-sleeved shirt, a sleeveless shirt, a vest, and the like. As shown, the upper body article of apparel 1000 is formed of a first composite nonwoven textile 1010 and a second composite nonwoven textile 1020. Aspects herein contemplate that the first and/or second composite nonwoven textiles 1010, 1020 may have the same or similar features as any of the printed composite nonwoven textiles 150, 850, 950. While not depicted, aspects herein contemplate that the first and/or second composite nonwoven textiles 1010, 1020 may include any of the printed layers 170, 870, 970, and in turn, aspects herein also contemplate that the upper body article of apparel 1000 may include the printed component 130.

The upper body article of apparel 1000 includes several seam locations where the first and/or second composite nonwoven textiles1010, 1020 are joined with one another or are joined with other portions of the upper body article of apparel 1000 (e.g., a sleeve portion, a collar portion, and the like). A first seam location 1002 is located near a side portion (e.g. a side seam) of the upper body article of apparel 1000, and a second seam location 1004 is located near an upper portion (e.g., a seam extending between a collar portion and a sleeve) of the upper body article of apparel 1000. Moreover, a third seam location 1006 is located near a collar portion of the upper body article of apparel 1000, and a fourth seam location 1008 is located near a sleeve portion of the upper body article of apparel 1000.

FIG. 23 illustrates an example lower body article of apparel 1100 that is in the form a lower body garment. Although shown as a pant, it is contemplated herein that the article of apparel 1100 may be in the form of a short, a capri, a tight, and the like. As shown, the lower body article of apparel 1100 is formed of a first composite nonwoven textile 1110 and a second composite nonwoven textile 1120. Aspects herein contemplate that the first and/or second composite nonwoven textiles 1110, 1120 may have the same or similar features as any of the printed composite nonwoven textiles 150, 850, 950. While not depicted, aspects herein contemplate that the first and/or second composite nonwoven textiles 1110, 1120 may include any of the printed layers 170, 870, 970, and in turn, aspects herein also contemplate that the lower body article of apparel 1100 may include the printed component 130.

The lower body article of apparel 1100 includes several seam locations where the first and/or second composite nonwoven textiles 1110, 1120 are joined with one another or are joined with other portions of the lower body article of apparel 1100 (e.g., a waist portion, a pocket portion, and the like). A first seam location 1102 is located near an outer side portion of the lower body article of apparel 1100 (e.g., a side seam), and a second seam location 1104 is located near an inner side portion (e.g., an inseam) of the lower body article of apparel 1100. Further, a third seam location 1106 is near a waist portion (e.g., a waistband) of the lower body article of apparel 1100, and fourth seam location 1108 is located near a pocket of the of the lower body article of apparel 1100.

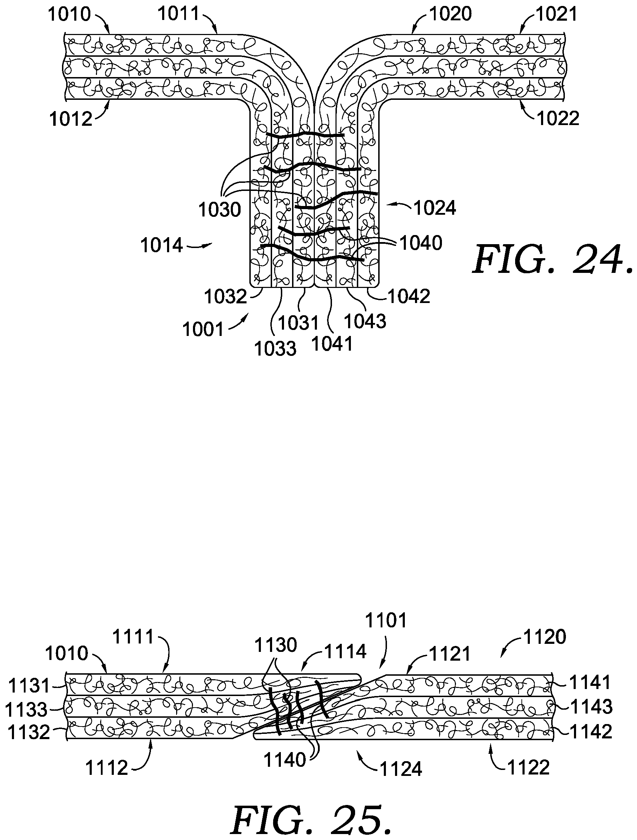

FIG. 24 depicts a cross-section view of the upper body article of apparel 1000 of FIG. 22, and an example first seam 1001 is depicted. Generally, the first seam 1001 is formed by an entanglement of fibers 1030 of the first composite nonwoven textile 1010 with fibers 1040 of the second composite nonwoven textile 1020. Moreover, the first composite nonwoven textile 1010 includes a first entangled web of fibers 1031 that form, at least in part, a first facing side 1011 of the first composite nonwoven textile 1010, a second entangled web of fibers 1032 that form, at least in part, an opposite second facing side 1012 of the first composite nonwoven textile 1010, and a third entangled web of fibers 1033 that is positioned between the first and second entangled web of fibers 1031, 1032. Similarly, the second composite nonwoven textile 1020 also includes a first entangled web of fibers 1041 that form, at least in part, a first facing side 1021 of the second composite nonwoven textile 1020, a second entangled web of fibers 1042 that form, at least in part, an opposite second facing side 1022 of the second composite nonwoven textile 1020, and a third entangled web of fibers 1043 that is positioned between the first and second entangled web of fibers 1041, 1042. In example aspects, a formation of the first seam 1001 may include positioning a first edge 1014 of the first composite nonwoven textile 1010 adjacent to a second edge 1024 of the second composite nonwoven textile 1020 such that the first facing side 1111 of the first composite nonwoven textile 1010 abuts or contacts the first facing side 1021 of the second composite nonwoven textile 1020. Then, while holding the first and second composite nonwoven textiles 1010, 1020 in this position subjecting the first and second edges 1014, 1024 to an entanglement process such that the fibers 1030, which may be from any of the first, second, or third entangled webs of fibers 1031, 1032, 1033 are entangled with the fibers 1040, which may be from any of the first, second, or third entangled webs of fibers 1041, 1042, 1043.

FIG. 25 depicts a cross-section view of the lower body article of apparel 1100 of FIG. 23, and an example second seam 1101 is depicted. Generally, the second seam 1101 is formed by an entanglement of fibers 1130 of the first composite nonwoven textile 1110 with fibers 1140 of the second composite nonwoven textile 1120. Moreover, the first composite nonwoven textile 1110 includes a first entangled web of fibers 1131 that form, at least in part, a first facing side 1111 of the first composite nonwoven textile 1110, a second entangled web of fibers 1132 that form, at least in part, an opposite second facing side 1112 of the first composite nonwoven textile 1110, and a third entangled web of fibers 1133 that is positioned between the first and second entangled web of fibers 1131, 1132. Similarly, the second composite nonwoven textile 1120 also includes a first entangled web of fibers 1141 that form, at least in part, a first facing side 1121 of the second composite nonwoven textile 1120, a second entangled web of fibers 1142 that form, at least in part, an opposite second facing side 1122 of the second composite nonwoven textile 1120, and a third entangled web of fibers 1143 that is positioned between the first and second entangled web of fibers 1141, 1142. In example aspects, a formation of the second seam 1101 may include positioning a first edge 1114 of the first composite nonwoven textile 1110 adjacent to a second edge 1124 of the second composite nonwoven textile 1120 such that the second facing side 1112 of the first composite nonwoven textile 1110 abuts or contacts the first facing side 1121 of the second composite nonwoven textile 1120. Then, while holding the first and second composite nonwoven textiles 1110, 1120 in this position subjecting the first and second edges 1114, 1124 to an entanglement process such that the fibers 1130, which may be from any of the first, second, or third entangled webs of fibers 1131, 1132, 1133 are entangled with the fibers 1140, which may be from any of the first, second, or third entangled webs of fibers 1141, 1142, 1143.

## Claims

1. A method of manufacturing a printed composite nonwoven textile (150) comprising: positioning a first face of a printed layer (120) adjacent to a second face of a first web of fibers (110) to form a composite structure, wherein the printed layer (120) includes a printed component (130); and subjecting the composite structure to a needle entanglement process, wherein subsequent to the needle entanglement process, at least a portion of the printed component (130) is incorporated into the first web of fibers (110), wherein the printed layer (120) is an interior web of fibers having a first region that includes a first portion of the printed component (130) and a second region that includes a second portion of the printed component (130), and
wherein the first region of the interior web of fibers has a greater mechanical entanglement with the first web of fibers (110) than the second region of the interior web of fibers.

2. The method of manufacturing the printed composite nonwoven textile (150) of claim 1, wherein subsequent to subjecting the composite structure to the needle entanglement process, at least some of the fibers in the first region of the interior web of fibers are mechanically entangled with the first web of fibers (110) and at least some of the fibers in the second region of the interior web of fibers are mechanically independent of the first web of fibers (110), wherein optionally the printed component (130) includes at least one selected from the following: a colorant and a sublimation dye.

3. The method of manufacturing the printed composite nonwoven textile (150) of claim 1 or 2, wherein the printed layer (120) is a spunlace layer, wherein optionally subsequent to subjecting the composite structure to the needle entanglement process, at least some of the fibers of the first web of fibers (110) extend through the spunlace layer, a first portion of the printed component (130) is incorporated into the first web of fibers (110), and a second portion of the printed component (130) is incorporated into the spunlace layer and wherein optionally the second portion of the printed component (130) is excluded from being incorporated into the first web of fibers (110).

4. The method of manufacturing the printed composite nonwoven textile (150) of claim 3, wherein the printed component (130) includes at least one selected from the following: a colorant and a sublimation dye.

5. The method of manufacturing the printed composite nonwoven textile (150) of any of claims 1 to 4, wherein the printed layer (120) comprises spunlace fibers or wherein the printed layer (120) comprises a web of fibers.

6. The method of manufacturing the printed composite nonwoven textile (150) of any of claims 1 to 5, wherein the composite structure further comprises a second web of fibers (112) adjacent a second face of the printed layer (120), and/or wherein the printed component (130) is on the first face of the printed layer (120).

7. The method of manufacturing the printed composite nonwoven textile (150) of any of claims 1 to 6 further comprising: prior to positioning the first face of the printed layer (120) adjacent to the second face of the first web of fibers (110) to form the composite structure, printing the printed component (130) on an interior layer to form the printed layer (120), wherein optionally the printing of the printed component (130) is a sublimation printing process.

8. The method of manufacturing the printed composite nonwoven textile (150) of any of claims 1 to 7 further comprising: prior to positioning the first face of the printed layer (120) adjacent to the second face of the first web of fibers (110) to form the composite structure, forming the printed layer (120), wherein optionally forming the printed layer (120) comprises: applying a sublimation dye to an interior layer; and subjecting the applied sublimation dye and the interior layer to a temperature from about 185 °C to about 205 °C for a time period from about 0.5 seconds to about 1.5 seconds.

9. The method of manufacturing the printed composite nonwoven textile (150) of any of claims 1 to 8, wherein the needle entanglement process comprises a first needle entanglement process with a first condition and a second needle entanglement process with a second condition different from the first condition.

10. The method of manufacturing the printed composite nonwoven textile (150) of any of claims 1 to 9, wherein the at least a portion of the printed component (130) incorporated into the first web of fibers (110) comprises one or more fibers of the printed layer (120), wherein the one or more fibers of the printed layer (120) extend into the first web of fibers (110).

11. The method of manufacturing the printed composite nonwoven textile (150) of any of claims 1 to 10, wherein the at least a portion of the printed component (130) incorporated into the first web of fibers (110) extends, at least in part, to a first face of the first web of fibers (110).

12. A method of manufacturing a printed asymmetrical-faced composite nonwoven textile comprising: utilizing a print technique to form a printed component (130) on an interior layer to form a printed layer (120); subsequent to utilizing the print technique, positioning a first face of the printed layer (120) adjacent to a second face of a first web of fibers (110) to form a composite structure; and subjecting the composite structure to a variable entanglement process, wherein subsequent to the variable entanglement process, at least a portion of the printed component (130) and a first face of the first web of fibers (110) form, at least in part, a first facing side of the asymmetrical-faced composite nonwoven textile, wherein subsequent to subjecting the composite structure to the entanglement process, a first portion of the printed component (130) is incorporated into the first web of fibers (110) and a second portion of the printed component (130) is excluded from being incorporated into the first web of fibers (110).

13. The method of manufacturing the printed asymmetrical-faced composite nonwoven textile of claim 12, wherein the print technique comprises applying a colorant on the first face of the interior layer.

14. The method of manufacturing the printed asymmetrical-faced composite nonwoven textile of claim 12 or 13, wherein the interior layer is a web of fibers or wherein the interior layer is a spunlace layer.

15. The method of manufacturing the printed asymmetrical-faced composite nonwoven textile of claim 12, wherein the print technique comprises sublimation printing a sublimation dye on the first face of the interior layer.

16. The method of manufacturing the printed asymmetrical-faced composite nonwoven textile of claim 15, wherein subsequent to subjecting the composite structure to the entanglement process, a first portion of the sublimation dyed interior layer is more incorporated into the first web of fibers (110) than a second portion of the sublimation dyed interior layer.

17. The method of manufacturing the printed asymmetrical-faced composite nonwoven textile of claim 16, wherein the interior layer is a web of fibers or wherein the interior layer is a spunlace layer.

18. A printed composite nonwoven textile (150) having a first facing side, the printed composite nonwoven textile (150) comprising: a first entangled web of fibers (110) having a first face and an opposite second face, wherein the first face forms, at least in part, the first facing side; and an interior layer having a first face positioned adjacent to the second face of the first entangled web of fibers, wherein the interior layer first face comprises a printed component (130) having a first portion and a second portion, wherein the first portion of the printed component (130) is more incorporated into the first web of fibers (110) than the second portion of the printed component (130) is incorporated into the first web of fibers (110).

19. The printed composite nonwoven textile (150) of claim 18, wherein the interior layer is a web of entangled fibers or wherein the interior layer is a spunlace layer.

20. The printed composite nonwoven textile (150) of claim 18 or 19, wherein the printed component (130) comprises a sublimation dye or a colorant.

21. An article of apparel comprising the printed composite nonwoven textile of any one of claims 18 to 20, wherein the article of apparel is optionally any one of: an upper-body garment, a lower-body garment, a hat, a glove, a sleeve, an article of footwear, an upper for a shoe.

## Patentansprüche

1. Ein Verfahren zur Herstellung eines bedruckten Verbund-Vliesstoffes (150), das Folgendes umfasst: Positionieren einer ersten Fläche einer bedruckten Schicht (120) angrenzend an eine zweite Fläche eines ersten Faservlieses bzw. einer ersten Faserbahn *(web of fibers)* (110), um eine Verbundstruktur zu bilden, wobei die bedruckte Schicht (120) eine gedruckte Komponente (130) beinhaltet; und Unterziehen der Verbundstruktur einem Nadelverschlingungsprozess, wobei nach dem Nadelverschlingungsprozess mindestens ein Abschnitt der gedruckten Komponente (130) in die erste Faserbahn (110) eingearbeitet *(incorporated)* wird, wobei die gedruckte Schicht (120) eine innere Faserbahn ist, die Folgendes aufweist: einen ersten Bereich, der einen ersten Abschnitt der gedruckten Komponente (130) beinhaltet, und einen zweiten Bereich, der einen zweiten Abschnitt der gedruckten Komponente (130) beinhaltet, und
wobei der erste Bereich der inneren Faserbahn eine größere mechanische Verschlingung mit der ersten Faserbahn (110) aufweist als der zweite Bereich der inneren Faserbahn.

2. Das Verfahren zur Herstellung des bedruckten Verbund-Vliesstoffs (150) nach Anspruch 1, wobei, nachdem die Verbundstruktur dem Nadelverschlingungsprozess unterzogen worden ist, mindestens einige der Fasern im ersten Bereich der inneren Faserbahn mechanisch mit der ersten Faserbahn (110) verschlungen sind, und mindestens einige der Fasern im zweiten Bereich der inneren Faserbahn mechanisch unabhängig von der ersten Faserbahn (110) sind, wobei optional die gedruckte Komponente (130) mindestens eines der folgenden beinhaltet: ein Färbemittel und einen Sublimationsfarbstoff.

3. Das Verfahren zur Herstellung des bedruckten Verbund-Vliesstoffs (150) nach Anspruch 1 oder 2, wobei die bedruckte Schicht (120) eine *Spunlace-*Schicht ist, wobei optional, nachdem die Verbundstruktur dem Nadelverschlingungsprozess unterzogen worden ist, zumindest einige der Fasern der ersten Faserbahn (110) durch die Spunlace-Schicht verlaufen, ein erster Abschnitt der gedruckten Komponente (130) in die erste Faserbahn (110) eingearbeitet wird und ein zweiter Abschnitt der gedruckten Komponente (130) in die Spunlace-Schicht eingearbeitet wird, und wobei optional der zweite Abschnitt der gedruckten Komponente (130) davon ausgeschlossen ist, in die erste Faserbahn (110) eingearbeitet zu werden.

4. Das Verfahren zur Herstellung des bedruckten Verbund-Vliesstoffs (150) nach Anspruch 3, wobei die gedruckte Komponente (130) mindestens einen der folgenden beinhaltet: ein Färbemittel und einen Sublimationsfarbstoff.

5. Das Verfahren zur Herstellung des bedruckten Verbund-Vliesstoffs (150) nach irgendeinem der Ansprüche von 1 bis 4, wobei die bedruckte Schicht (120) Spunlace-Fasern umfasst, oder wobei die bedruckte Schicht (120) eine Faserbahn umfasst.

6. Das Verfahren zur Herstellung des bedruckten Verbund-Vliesstoffs (150) nach irgendeinem der Ansprüche von 1 bis 5, wobei die Verbundstruktur ferner eine zweite Faserbahn (112) umfasst, die an eine zweite Fläche der bedruckten Schicht (120) angrenzt, und/oder wobei sich die gedruckte Komponente (130) auf der ersten Fläche der bedruckten Schicht (120) befindet.

7. Das Verfahren zur Herstellung des bedruckten Verbund-Vliesstoffs (150) nach irgendeinem der Ansprüche von 1 bis 6, das ferner Folgendes umfasst: vor dem Positionieren der ersten Fläche der bedruckten Schicht (120) angrenzend an die zweite Fläche der ersten Faserbahn (110), um die Verbundstruktur zu bilden, Drucken der gedruckten Komponente (130) auf eine Innenschicht, um die bedruckte Schicht (120) zu bilden, wobei optional das Drucken der gedruckten Komponente (130) ein Sublimationsdruckverfahren ist.

8. Das Verfahren zur Herstellung des bedruckten Verbund-Vliesstoffs (150) nach irgendeinem der Ansprüche von 1 bis 7, das ferner Folgendes umfasst: vor dem Positionieren der ersten Seite der bedruckten Schicht (120) angrenzend an die zweite Fläche der ersten Faserbahn (110), um die Verbundstruktur zu bilden, Bilden der bedruckten Schicht (120), wobei optional das Bilden der bedruckten Schicht (120) Folgendes umfasst: Aufbringen eines Sublimationsfarbstoffs auf eine Innenschicht; und Unterziehen des aufgebrachten Sublimationsfarbstoffs und der inneren Schicht einer Temperatur von etwa 185 °C bis etwa 205 °C für eine Zeitspanne von etwa 0,5 Sekunden bis etwa 1,5 Sekunden.

9. Das Verfahren zur Herstellung des bedruckten Verbund-Vliesstoffs (150) nach irgendeinem der Ansprüche von 1 bis 8, wobei der Nadelverschlingungsprozess einen ersten Nadelverschlingungsprozess mit einer ersten Bedingung *(condition)* und einen zweiten Nadelverschlingungsprozess mit einer zweiten, von der ersten Bedingung verschiedenen Bedingung umfasst.

10. Das Verfahren zur Herstellung des bedruckten Verbund-Vliesstoffs (150) nach einem der Ansprüche 1 bis 9, wobei der mindestens eine Abschnitt der gedruckten Komponente (130), der in die erste Faserbahn (110) eingearbeitet ist, eine oder mehrere Fasern der bedruckten Schicht (120) umfasst, wobei sich die eine oder mehreren Fasern der bedruckten Schicht (120) in die erste Faserbahn (110) erstrecken.

11. Das Verfahren zur Herstellung des bedruckten Verbund-Vliesstoffs (150) nach irgendeinem der Ansprüche von 1 bis 10, wobei sich zumindest ein Abschnitt der in die erste Faserbahn (110) eingearbeiteten gedruckten Komponente (130) zumindest teilweise bis zu einer ersten Fläche der ersten Faserbahn (110) erstreckt.

12. Ein Verfahren zur Herstellung eines bedruckten Verbund-Vliesstoffes mit asymmetrischen Flächen, das Folgendes umfasst: Anwenden einer Drucktechnik, um eine gedruckte Komponente (130) auf einer inneren Schicht zu bilden, um eine bedruckte Schicht (120) zu bilden; im Anschluss an die Anwendung der Drucktechnik, Positionieren einer ersten Fläche der bedruckten Schicht (120) neben einer zweiten Fläche einer ersten Faserbahn (110), um eine Verbundstruktur zu bilden; und Unterziehen der Verbundstruktur einem variablen Verschlingungsprozess, wobei nach dem variablen Verschlingungsprozess zumindest ein Abschnitt der gedruckten Komponente (130) und eine erste Fläche der ersten Faserbahn (110) zumindest teilweise eine erste weisende Seite *(facing side)* des Verbund-Vliesstoffes mit asymmetrischen Flächen bilden, wobei, nachdem die Verbundstruktur dem Verschlingungsprozess unterzogen worden ist, ein erster Abschnitt der gedruckten Komponente (130) in die erste Faserbahn (110) eingearbeitet wird, und ein zweiter Abschnitt der gedruckten Komponente (130) davon ausgeschlossen ist, in die erste Faserbahn (110) eingearbeitet zu werden.

13. Das Verfahren zur Herstellung des bedruckten Verbund-Vliesstoffs mit asymmetrischen Flächen nach Anspruch 12, wobei die Drucktechnik das Aufbringen eines Färbemittels auf die erste Fläche der Innenschicht umfasst.

14. Das Verfahren zur Herstellung des bedruckten Verbund-Vliesstoffs mit asymmetrischen Flächen nach Anspruch 12 oder 13, wobei die Innenschicht eine Faserbahn ist, oder wobei die Innenschicht eine Spunlace-Schicht ist.

15. Das Verfahren zur Herstellung des bedruckten Verbund-Vliesstoffs mit asymmetrischen Flächen nach Anspruch 12, wobei die Drucktechnik das Sublimationsdrucken eines Sublimationsfarbstoffs auf die erste Fläche der Innenschicht umfasst.

16. Das Verfahren zur Herstellung des bedruckten Verbund-Vliesstoffs mit asymmetrischen Flächen nach Anspruch 15, wobei, nachdem die Verbundstruktur dem Verschlingungsprozess unterzogen worden ist, ein erster Abschnitt der sublimationsgefärbten Innenschicht stärker in die erste Faserbahn (110) eingearbeitet wird als ein zweiter Abschnitt der sublimationsgefärbten Innenschicht.

17. Das Verfahren zur Herstellung des bedruckten Verbund-Vliesstoffs mit asymmetrischen Flächen nach Anspruch 16, wobei die Innenschicht eine Faserbahn ist, oder wobei die Innenschicht eine Spunlace-Schicht ist.

18. Ein bedruckter Verbund-Vliesstoff (150) mit einer ersten weisenden Seite *(facing side),* wobei der bedruckte Verbund-Vliesstoff (150) Folgendes umfasst: eine erste verschlungene Faserbahn (110) mit einer ersten Fläche und einer gegenüberliegenden zweiten Fläche, wobei die erste Fläche zumindest teilweise die erste weisende Seite bildet; und wobei eine Innenschicht eine erste Fläche aufweist, die angrenzend an der zweiten Fläche der ersten verschlungenen Faserbahn angeordnet ist, wobei die erste Fläche der Innenschicht eine gedruckte Komponente (130) mit einem ersten Abschnitt und einem zweiten Abschnitt umfasst, wobei der erste Abschnitt der gedruckten Komponente (130) stärker in die erste Faserbahn (110) eingearbeitet ist als der zweite Abschnitt der gedruckten Komponente (130) in die erste Faserbahn (110).

19. Der bedruckte Verbund-Vliesstoff (150) nach Anspruch 18, wobei die Innenschicht eine Bahn aus verschlungenen Fasern ist, oder wobei die Innenschicht eine Spunlace-Schicht ist.

20. Der bedruckte Verbund-Vliesstoff (150) nach Anspruch 18 oder 19, wobei die gedruckte Komponente (130) einen Sublimationsfarbstoff oder ein Färbemittel umfasst.

21. Ein Kleidungsstück, das den bedruckten Verbund-Vliesstoff nach irgendeinem der Ansprüche von 18 bis 20 umfasst, wobei das Kleidungsstück optional irgendeines der folgenden ist: ein Oberkörper-Kleidungsstück, ein Unterkörper-Kleidungsstück, eine Mütze, ein Handschuh, ein Ärmel, ein Fußbekleidungsartikel, ein Oberteil für einen Schuh.

## Revendications

1. Un procédé de fabrication d'un textile non tissé composite imprimé (150) comprenant le fait de : positionner une première face d'une couche imprimée (120) adjacente à une deuxième face d'une première toile ou encore bande de fibres *(web of fibers)* (110) pour former une structure composite, sachant que la couche imprimée (120) inclut un composant imprimé (130) ; et de soumettre la structure composite à un processus d'enchevêtrement par aiguille *(needle entanglement process),* sachant qu'après le processus d'enchevêtrement par aiguille, au moins une portion du composant imprimé (130) est incorporée dans la première bande de fibres (110), sachant que la couche imprimée (120) est une bande de fibres intérieure présentant une première région qui inclut une première portion du composant imprimé (130) et une deuxième région qui inclut une deuxième portion du composant imprimé (130), et
sachant que la première région de la bande de fibres intérieure présente un niveau d'enchevêtrement mécanique plus important avec la première bande de fibres (110) que la deuxième région de la bande de fibres intérieure.

2. Le procédé de fabrication d'un textile non-tissé composite imprimé (150) d'après la revendication 1, sachant qu'après avoir soumis la structure composite au processus d'enchevêtrement par aiguille, au moins certaines des fibres dans la première région de la bande de fibres intérieure sont mécaniquement enchevêtrées avec la première bande de fibres (110), et qu'au moins certaines des fibres de la deuxième région de la bande de fibres intérieure sont mécaniquement indépendantes de la première bande de fibres (110), sachant que facultativement le composant imprimé (130) inclut au moins un élément choisi parmi les suivants : un colorant et un colorant de sublimation.

3. Le procédé de fabrication d'un textile non-tissé composite imprimé (150) d'après la revendication 1 ou 2, sachant que la couche imprimée (120) est une couche *spunlace,* sachant que facultativement après avoir soumis la structure composite au processus d'enchevêtrement par aiguille, au moins certaines des fibres de la première bande de fibres (110) s'étendent à travers la couche *spunlace,* une première portion du composant imprimé (130) est incorporée dans la première bande de fibres (110), et qu'une deuxième portion du composant imprimé (130) est incorporée dans la couche *spunlace,* et sachant que facultativement la deuxième portion du composant imprimé (130) est exclue de l'incorporation dans la première bande de fibres (110).

4. Le procédé de fabrication d'un textile non tissé composite imprimé (150) d'après la revendication 3, sachant que le composant imprimé (130) inclut au moins un élément sélectionné parmi les suivants : un colorant et un colorant de sublimation.

5. Le procédé de fabrication d'un textile non-tissé composite imprimé (150) d'après l'une quelconque des revendications de 1 à 4, sachant que la couche imprimée (120) comprend des fibres *spunlace,* ou sachant que la couche imprimée (120) comprend une bande de fibres.

6. Le procédé de fabrication d'un textile non-tissé composite imprimé (150) d'après l'une quelconque des revendications de 1 à 5, sachant que la structure composite comprend en outre une deuxième bande de fibres (112) adjacente à une deuxième face de la couche imprimée (120), et/ou sachant que le composant imprimé (130) se trouve sur la première face de la couche imprimée (120).

7. Le procédé de fabrication d'un textile non tissé composite imprimé (150) d'après l'une quelconque des revendications de 1 à 6, comprenant en outre le fait de : avant de positionner la première face de la couche imprimée (120) de manière adjacente à la deuxième face de la première bande de fibres (110) pour former la structure composite, imprimer le composant imprimé (130) sur une couche intérieure pour former la couche imprimée (120), sachant que facultativement l'impression du composant imprimé (130) est un procédé d'impression par sublimation.

8. Le procédé de fabrication d'un textile non tissé composite imprimé (150) d'après l'une quelconque des revendications de 1 à 7, comprenant en outre le fait de : avant de positionner la première face de la couche imprimée (120) de manière adjacente à la deuxième face de la première bande de fibres (110) pour former la structure composite, former la couche imprimée (120), sachant que facultativement la formation de la couche imprimée (120) comprend le fait de : appliquer un colorant de sublimation sur une couche intérieure ; et de soumettre le colorant de sublimation appliqué et la couche intérieure à une température comprise entre environ 185 °C et environ 205 °C pendant une durée comprise entre environ 0,5 secondes et environ 1,5 secondes.

9. Le procédé de fabrication d'un textile non tissé composite imprimé (150) d'après l'une quelconque des revendications de 1 à 8, sachant que le processus d'enchevêtrement par aiguille comprend un premier processus d'enchevêtrement par aiguille avec une première condition *(condition)* et un deuxième processus d'enchevêtrement par aiguille avec une deuxième condition différente de la première condition.

10. Le procédé de fabrication d'un textile non-tissé composite imprimé (150) d'après l'une quelconque des revendications de 1 à 9, sachant que l'au moins une portion du composant imprimé (130) incorporé dans la première bande de fibres (110) comprend une ou plusieurs fibres de la couche imprimée (120), sachant que l'une ou plusieurs fibres de la couche imprimée (120) s'étendent dans la première bande de fibres (110).

11. Le procédé de fabrication d'un textile non-tissé composite imprimé (150) d'après l'une quelconque des revendications de 1 à 10, sachant que l'au moins une portion du composant imprimé (130) incorporé dans la première bande de fibres (110) s'étend, au moins en partie, jusqu'à une première face de la première bande de fibres (110).

12. Un procédé de fabrication d'un textile non tissé composite à faces asymétriques imprimé, comprenant le fait de : utiliser une technique d'impression pour former un composant imprimé (130) sur une couche intérieure pour former une couche imprimée (120) ; après l'utilisation de la technique d'impression, positionner une première face de la couche imprimée (120) de manière adjacente à une deuxième face d'une première toile ou encore bande de fibres *(web of fibers)* (110) pour former une structure composite ; et de soumettre la structure composite à un processus d'enchevêtrement variable, sachant qu'après le processus d'enchevêtrement variable, au moins une portion du composant imprimé (130) et une première face de la première bande de fibres (110) forment, au moins en partie, une première face orientée *(facing side)* d'un textile non tissé composite à faces asymétriques, sachant qu'après avoir soumis la structure composite au processus d'enchevêtrement, une première portion du composant imprimé (130) est incorporée dans la première bande de fibres (110) et une deuxième portion du composant imprimé (130) est exclue de l'incorporation dans la première bande de fibres (110).

13. Le procédé de fabrication du textile non tissé composite à faces asymétriques imprimé d'après la revendication 12, sachant que la technique d'impression comprend l'application d'un colorant sur la première face de la couche intérieure.

14. Le procédé de fabrication du textile non tissé composite à faces asymétriques imprimé d'après la revendication 12 ou 13, sachant que la couche intérieure est une bande de fibres ou sachant que la couche intérieure est une couche *spunlace.*

15. Le procédé de fabrication du textile non tissé composite à faces asymétriques imprimé d'après la revendication 12, sachant que la technique d'impression comprend l'impression par sublimation d'un colorant de sublimation sur la première face de la couche intérieure.

16. Le procédé de fabrication du textile non tissé composite à faces asymétriques imprimé d'après la revendication 15, sachant qu'après avoir soumis la structure composite au processus d'enchevêtrement, une première portion de la couche intérieure teintée par sublimation est plus incorporée dans la première bande de fibres (110) qu'une deuxième portion de la couche intérieure teintée par sublimation.

17. Le procédé de fabrication du textile non tissé composite à faces asymétriques imprimé d'après la revendication 16, sachant que la couche intérieure est une bande de fibres ou sachant que la couche intérieure est une couche *spunlace.*

18. Un textile non tissé composite imprimé (150) présentant une première face orientée *(facing side),* le textile non tissé composite imprimé (150) comprenant : une première toile ou encore bande de fibres *(web of fibers)* enchevêtrée (110) présentant une première face et une deuxième face opposée, sachant que la première face forme, au moins en partie, la première face orientée ; et une couche intérieure présentant une première face positionnée de manière adjacente à la deuxième face de la première bande de fibres enchevêtrée, sachant que la première face de la couche intérieure comprend un composant imprimé (130) présentant une première portion et une deuxième portion, sachant que la première portion du composant imprimé (130) est plus incorporée dans la première bande de fibres (110) que la deuxième portion du composant imprimé (130) n'est incorporée dans la première bande de fibres (110).

19. Le textile non-tissé composite imprimé (150) d'après la revendication 18, sachant que la couche intérieure est une bande de fibres enchevêtrées ou que la couche intérieure est une couche *spunlace.*

20. Le textile composite non tissé imprimé (150) d'après la revendication 18 ou 19, sachant que le composant imprimé (130) comprend un colorant de sublimation ou un colorant.

21. Un article vestimentaire comprenant le textile composite non tissé imprimé d'après l'une quelconque des revendications de 18 à 20, sachant que l'article vestimentaire est facultativement l'un des suivants : un vêtement pour le haut du corps, un vêtement pour le bas du corps, un couvre-chef, un gant, une manche, un article chaussant, une tige de chaussure.
